(19) Europäisches Patentamt
European Patent Office
Office européen des brevets

(11) Veröffentlichungsnummer: **0 253 272 B1**

(12) EUROPÄISCHE PATENTSCHRIFT

(45) Veröffentlichungstag der Patentschrift: **23.09.92**

(51) Int. Cl.[5]: **C08G 59/50**, C08G 59/24, C09D 17/00

(21) Anmeldenummer: **87109752.3**

(22) Anmeldetag: **07.07.87**

# (54) Additionsverbindungen, Verfahren zu ihrer Herstellung und ihre Verwendung.

(30) Priorität: **11.07.86 DE 3623296**
**11.07.86 DE 3623297**

(43) Veröffentlichungstag der Anmeldung:
**20.01.88 Patentblatt 88/03**

(45) Bekanntmachung des Hinweises auf die Patenterteilung:
**23.09.92 Patentblatt 92/39**

(84) Benannte Vertragsstaaten:
**CH DE ES FR GB IT LI NL SE**

(56) Entgegenhaltungen:
**FR-A- 2 416 927**
**US-A- 4 182 833**

**PATENT ABSTRACTS OF JAPAN, Band 12, Nr. 283 (C-518)[3130], 3. August 1988; & JP-A-63 62 897**

(73) Patentinhaber: **HOECHST AKTIENGESELLSCHAFT**
**Postfach 80 03 20**
**W-6230 Frankfurt am Main 80(DE)**

(72) Erfinder: **Dietz, Erwin, Dr.**
**St. Matthäus Strasse 7**
**W-6233 Kelkheim (Taunus)(DE)**
Erfinder: **Sommer, Andreas, Dr.**
**Holunderweg 17**
**W-6272 Niedernhausen(DE)**
Erfinder: **Kroh, Adolf**
**Vorderstrasse 27**
**W-6251 Selters(DE)**
Erfinder: **Hohn, Jürgen, Dr.**
**Egerländer Strasse 26**
**W-6233 Kelkheim (Taunus)(DE)**
Erfinder: **Hafner, Otmar**
**Zum Talblick 27**
**W-6247 Glashütten/Taunus(DE)**
Erfinder: **Rieper, Wolfgang, Dr.**
**Sternstrasse 11**
**W-6000 Frankfurt am Main(DE)**

**EP 0 253 272 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Additionsverbindungen, die durch Umsetzung Von Polyepoxiden mit Aminen erhalten werden können, sowie die Salze der Additionsverbindungen. Die Erfindung betrifft außerdem die Herstellung der Additionsverbindungen und ihrer Salze sowie deren Verwendung als Dispergiermittel für Feststoffe, insbesondere Pigmente, in natürlichen und synthetischen, vorzugsweise organischen Medien.

Bei der Herstellung von Feststoffdispersionen werden häufig oberflächenaktive Substanzen verwendet, die den mechanischen Aufwand bei der Dispergierung der Feststoffe in flüssigen Medien verringern sollen. Diese oberflächenaktiven Substanzen haben in der Regel auch Einfluß auf die anwendungstechnischen Eigenschaften der Feststoffdispersionen. Für Pigmentbindemittelsysteme wird meist eine möglichst hohe Flockungsstabilität, Farbstärke und Glanz sowie gute rheologische Eigenschaften angestrebt. Aufgabe der Erfindung ist es, Hilfsmittel für Feststoffdispersionen bereitzustellen, die die anwendungstechnischen, insbesondere die obenstehenden Eigenschaften der Feststoffdispersionen verbessern.

Aus der US-A-3853770 sind Additionsverbindungen aus Polyepoxiden und sekundären Aminen bekannt, die als Weichspülmittel für Textilien geeignet sind. Die Polyepoxide sind Phenol-Formaldehyd-Novolake mit 2 bis 7 Kernen, deren Hydroxygruppen mit 2,3-Epoxypropylgruppen veräthert sind. Die verwendeten sekundären Amine haben zwei langkettige Alkyl- oder Alkenylreste.

Weiterhin sind aus der EP-A-0044816 als Härtungsmittel für Epoxidharze geeignete Additionsverbindungen bekannt, die durch Umsetzung eines Polyepoxids mit einem mehrfachen Überschuß an Diaminen oder Polyaminen erhalten werden, wobei das Polyepoxid ein mit 2,3-Epoxypropylgruppen verätherter Kresol-Formaldehyd-Novolak mit einer mittleren Zahl der Kerne zwischen 2,2 und 5,4 ist.

Die erwähnten Additionsverbindungen vom Stand der Technik führen jedoch nur zu einer geringen oder keiner Verbesserung der anwendungstechnischen Eigenschaften von Pigmentbindemittelsystemen, wie beispielsweise Flockungsstabilität, Glanzverhalten, Farbstärke oder Fließfähigkeit.

Gegenstand der Erfindung sind Additionsverbindungen und ihre Salze, erhältlich durch Umsetzung von Polyepoxiden mit Aminen und gegebenenfalls anschließender Salzbildung mit Säuren, dadurch gekennzeichnet, daß die Additionsverbindungen in einem Verfahren erhältlich sind, in dem ein Polyepoxid oder mehrere Polyepoxide der idealisierten allgemeinen Formel (I)

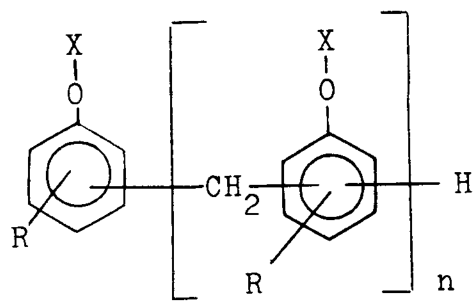

(I)

in der

- n eine Zahl von 2 bis 10, vorzugsweise 4 bis 6,
- R ein Wasserstoffatom oder eine $C_1$-$C_{24}$-Alkylgruppe, vorzugsweise -H oder $C_1$-$C_4$-Alkyl, insbesondere Methyl, und
- X den 2,3-Epoxypropylrest bedeuten

mit einem Amin oder mehreren Aminen der allgemeinen Formel (II)

$(H_2N\text{-}R^2\text{-})_pN(H)_{2\text{-}p}\text{-}R^1$ (II)

in der

- p eine ganze Zahl von 0 bis 2, vorzugsweise 1 oder 2,
- $R^1$ einen gesättigten oder ungesättigten aliphatischen Alkylrest mit 8 bis 24 C-Atomen, vorzugsweise mit 12 bis 20 C-Atomen, und
- $R^2$ eine $C_1$-$C_{12}$-Alkylengruppe, vorzugsweise $C_2$-$C_6$-Alkylen, insbesondere Propylen, bedeuten,

sowie mit mindestens einem Amin aus der Gruppe der Amine der allgemeinen Formeln (III1), (III2), (III3) und (III4)

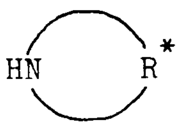 (III1)

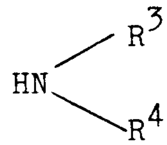 (III2)

$H_2N-A-R^4$ (III3)

$H_2N-A^*-NR^3-(A)_q-R^4$ (III4)

in denen

R* zusammen mit dem N-Atom ein heterocyclisches Ringsystem, das gegebenenfalls weiter substituiert ist, darstellt und

$R^3$ für ein Wasserstoffatom oder eine $C_1$-$C_{24}$-Alkylgruppe, vorzugsweise -H oder $C_1$-$C_{12}$-Alkyl, insbesondere -H oder $C_1$-$C_4$-Alkyl,

$R^4$ für ein gesättigtes oder ungesättigtes, einkerniges oder mehrkerniges carbocyclisches oder heterocyclisches Ringsystem mit 2 bis 22 C-Atomen oder für zwei oder mehrere der genannten Ringsysteme, die untereinander durch ein Glied der Formel $-CH_2-$, -O-, -S-, -CO-, -SO-, $-SO_2-$, -NH- oder eine Kombination der vorstehenden Glieder verbunden sind, wobei die genannten Ringssysteme bzw. die Gruppe der verbundenen Ringsysteme gegebenenfalls durch einen oder mehrere der Reste $-R^5$, Halogen wie -F, -Cl oder -Br, $-OR^5$, $-NR^5R^6$, $-COOR^5$, $-CONR^5R^6$, $-NR^5COR^6$, -CN, $-CF_3$ und $-NO_2$ substituiert sind, wobei $-R^5$ und $-R^6$ unabhängig voneinander -H oder $C_1$-$C_{24}$-Alkyl, vorzugsweise -H oder $C_1$-$C_{12}$-Alkyl, insbesondere -H oder $C_1$-$C_4$-Alkyl, bedeuten,

oder für einen Rest der Formel $-R^7-NR^8R^9$, in der $R^7$ eine $C_2$-$C_{200}$-Alkylengruppe, die durch Sauerstoffatome unterbrochen sein kann, sowie $R^8$ und $R^9$ unabhängig voneinander -H oder $C_1$-$C_{24}$-Alkyl, vorzugsweise -H oder $C_1$-$C_{12}$-Alkyl, insbesondere -H oder $C_1$-$C_4$-Alkyl, bedeuten,

oder für einen Rest der Formel (IIIa) oder (IIIb)

$$-\left[(CHR^{10})_y-NR^{11}\right]_m-(CHR^{10})_y-NR^8R^9 \qquad \text{(IIIa)}$$

$$-(CHR^{10})_y-N[(CHR^{10})_y-NR^8R^9]_2 \qquad \text{(IIIb)}$$

in denen die y unabhängig voneinander jeweils eine ganze Zahl von 2 bis 6, m eine ganze Zahl von 1 bis 6 und $R^8$, $R^9$, $R^{10}$ und $R^{11}$ unabhängig voneinander -H oder $C_1$-$C_{24}$-Alkyl, vorzugsweise -H oder $C_1$-$C_{12}$-Alkyl, insbesondere -H oder $C_1$-$C_4$-Alkyl bedeuten,

oder für einen Rest der Formel $-R^{12}-OR^{13}$, in der $R^{12}$ eine Alkylengruppe mit 2 bis 30 C-Atomen, die durch -O- und/oder $-NR^{13}-$ unterbrochen sein kann, und $R^{13}$ -H oder eine $C_1$-$C_{24}$-Alkylgruppe, vorzugsweise -H oder $C_1$-$C_{12}$-Alkyl, insbesondere -H oder $C_1$-$C_4$-Alkyl, bedeuten,

A für eine $C_1$-$C_{30}$-Alkylengruppe, vorzugsweise $C_1$-$C_{10}$-Alkylen, insbesondere $C_1$-$C_6$-Alkylen, und

A* für eine $C_1$-$C_{12}$-Alkylengruppe, vorzugsweise $C_2$-$C_6$-Alkylen, insbesondere Ethylen oder Propylen, stehen sowie

q 0 oder 1, vorzugsweise 1 ist,

in solchem Mengenverhältnis umgesetzt werden, daß 1 bis 99 %, vorzugsweise 10 bis 90 %, insbesondere 20 bis 70 % der Epoxygruppen des Polyepoxids der Formel (I) mit Aminen der Formel (II) und 99 bis 1 %, vorzugsweise 90 bis 10 %, insbesondere 30 bis 80 % der Epoxygruppen mit dem Amin bzw. den Aminen aus der Gruppe der Amine der Formeln (III1) bis (III4) umgesetzt werden, und gegebenenfalls das erhaltene Produkt mit einer Säure umgesetzt wird.

Von besonderem Interesse sind erfindungsgemäße Additionsverbindungen und ihre Salze, dadurch gekennzeichnet, daß in den Aminen der Formel (III2) $R^3$ für den Rest -H oder $C_1$-$C_4$-Alkyl und $R^4$ für ein aromatisches carbocyclisches Ringsystem oder ein gesättigtes oder ungesättigtes heterocyclisches Ringsystem, insbesondere für ein heteroaromatisches Ringsystem, oder für zwei oder mehrere der genannten Ringsysteme, die untereinander durch die bereits genannten divalenten Glieder verbunden sind, wobei die

genannten Ringsysteme bzw. die Gruppe der verbundenen Ringsysteme gegebenenfalls durch die bereits genannten Reste substituiert sind, steht.

Von besonderem Interesse sind weiterhin erfindungsgemäße Additionsverbindungen und ihre Salze, dadurch gekennzeichnet, daß in den Aminen der Formel (III1) R* zusammen mit dem N-Atom einen heterocyclischen Ring mit vorzugsweise 5 oder 6 Ringatomen, an dem noch ein oder mehrere Benzolringe ankondensiert sein können und das Ringsystem gegebenenfalls noch durch weitere Reste, wie $C_1$-$C_{12}$-Alkylgruppen, insbesondere $C_1$-$C_4$-Alkyl, und $C_1$-$C_{12}$-Alkoxygruppen, insbesondere $C_1$-$C_4$-Alkoxy, substituiert ist, bedeuten.

Von besonderem Interesse sind auch erfindungsgemäße Additionsverbindungen und ihre Salze, dadurch gekennzeichnet, daß in den Aminen der Formel (III2) $R^3$ für den Rest -H oder $C_1$-$C_4$-Alkyl und $R^4$ für einen Rest der obengenannten Formel (IIIa), in der die y jeweils unabhängig voneinander die Zahl 2 oder 3, m die Zahl 1, 2 oder 3, die $R^{10}$ unabhängig voneinander -H oder Methyl sowie $R^8$, $R^9$ und $R^{11}$ jeweils unabhängig voneinander -H, Methyl oder Ethyl bedeuten, steht.

Von besonderem Interesse sind erfindungsgemäße Additionsverbindungen und ihre Salze, in denen in dem Amin der Formel (III3) oder (III4)

$R^4$ für ein einkerniges oder mehrkerniges, vorzugsweise einkerniges, carbocyclisches aromatisches Ringsystem, das gegebenenfalls weiter substituiert ist, steht.

Von besonderem Interesse sind auch erfindungsgemäße Additionsverbindungen und ihre Salze in denen in dem Amin der Formel (III3) oder (III4)

$R^4$ für ein heterocyclisches Ringsystem steht, das gegebenenfalls weiter substituiert ist und das vorzugsweise einen heterocyclischen Ring mit 5 oder 6 Ringatomen enthält, an dem ein weiterer Benzolkern oder mehrere Benzolkerne ankondensiert sein können.

Gegenstand der Erfindung ist auch das Verfahren zur Herstellung der obengenannten Additionsverbindungen und ihrer Salze.

Die erfindungsgemäßen Additionsprodukte werden durch Reaktion von Polyepoxiden mit primäre und sekundäre Aminogruppen enthaltenden Verbindungen, hier kurz als Amine bezeichnet hergestellt.

Als Epoxide eignen sich handelsübliche polyfunktionelle Epoxide auf der Basis von Novolaken, entsprechend obengenannter allgemeiner Formel (I), wie sie durch Kondensation von Phenol oder Alkylphenolen mit Formaldehyd und anschließende Reaktion der phenolischen Hydroxygruppen mit Epichlorhydrin gemäß dem Stand der Technik zugänglich sind, siehe z.B. Y. Chin in Epoxy Resins, Supplm. A, SEI International (1983). Sie haben eine mittlere Funktionalität von 3 bis 11, vorzugsweise von 5 bis 7, sowie ein Epoxyäquivalentgewicht von 150 bis 300 g, vorzugsweise 170 bis 240 g pro mol Epoxygruppen. Die mittlere Funktionalität ist dabei der Quotient aus dem mittleren Molekulargewicht und dem Epoxyäquivalentgewicht.

Von besonderem Interesse sind die Polyepoxide der idealisierten allgemeinen Formel (I), in der R ein Wasserstoffatom oder einen $C_1$-$C_4$-Alkylrest, wie Methyl, Ethyl, Prop-1-yl, Prop-2-yl, But-1-yl, But-2-yl, 2-Methyl-prop-2-yl oder 2-Methyl-prop-1-yl, vorzugsweise Methyl, bedeutet.

Die allgemeine Formel (I) ist als idealisierte Formel angegeben und steht dabei vor allem auch für die handelsüblichen Polyepoxide, bei denen auf Grund von Nebenreaktionen bei der Einführung der Epoxy-Gruppe nicht 100 % aller Reste X den 2,3-Epoxypropyl-Rest bedeuten. Die idealisierte Formel (I) umfaßt dabei Polyepoxide, in denen bis zu 25 % aller X andere Reste bedeuten, wie den Rest 2,3-Dihydroxy-prop-1-yl und 3-Chlor-2-hydroxy-prop-1-yl sowie Reste von polymeren Ethern, die bei der Herstellung der Polyepoxide üblicherweise entstehen.

Beispiele für geeignete handelsübliche Polyepoxide der Formel (I) sind (R)Araldit ECN 1273 (mittleres n = 5, R = 2-Methyl, Epoxyäquivalentgewicht 225), Araldit ECN 1299 (mittleres n = 6, R = 2-Methyl, Epoxyäquivalentgewicht 235), Araldit ECN 1280 (mittleres n = 4,1, R = 2-Methyl, Epoxyäquivalentgewicht 230) der Fa. Ciba Geigy AG und RGrilonit ESN 138 (R = H, Epoxyäquivalentgewicht 180) der Fa. EMS-Chemie sowie Epo Tohto YCDN-701, 702, 703, 704 (R = 2-Methyl, Epoxyäquivalentgewicht 200 bis 230) und Epo Tohto YDPN-638 (R = H Epoxyäquivalentgewicht ca. 180) der Fa. Tohto-Kasei sowie Epiclon N-665, 673, 680, 695 (R = 2-Methyl, Epoxyäquivalentgewicht 200 bis 250) der Fa. Dainippon sowie Rütapox 0300 (R = H, Epoxyäquivalentgewicht ca. 185) der Fa. Bakelite.

Die Amine sind in den obengenannten allgemeinen Formeln (II), (III1), (III2), (III3) und (III4) zusammengefaßt.

Vertreter der Formel (II) sind beispielsweise folgende langkettigen aliphatischen Amine, insbesondere Fettamine:

Octylamin, Decylamin, Dodecylamin, Tetradecylamin, Hexadecylamin, Octadecylamin, Octadecenylamin, Cocosfettamin, Oleylamin, Stearylamin, Talgfettamin sowie insbesondere entsprechende Derivate mit Aminopropylgruppen, wie beispielsweise Talgfettpropylendiamin, Laurylpropylendiamin und N,N-Bis-

(aminopropyl)-Talgfettamin.

Beispiele für heterocyclische Amine der Formeln (III1) sind beispielsweise unsubstituierte und substituierte Imidazole, Benzimidazole, Triazole, Morpholine, Pyrrolidine, Piperidine, Imidazoline, Imidazolidine und Hexamethylenimine.

Geeignete Amine der Formel (III2), in der $R^4$ für ein Ringsystem oder eine Gruppe von verbundenen Ringsystemen steht, wobei die Ringsysteme die bereits aufgeführten Substituenten tragen können, sind aromatische, heterocyclische und cycloaliphatische Amine, wie beispielsweise Anilin, Alkylaniline (Toluidine, Xylidine und N-Alkylaniline), Halogen-, Dihalogen- und Trihalogenaniline, Aminobenzotrifluoride, Aminophenole und Aminophenolether (Anisidine und Phenetidine), Aminohydrochinondimethylether, Aminoresorcindimethylether, Aminobenzoesäureester, Aminobenzamide, Aminobenzoesäure, Aminobenzonitrile, Nitraniline und Dinitraniline, Phenylendiamine, 4,4'-Diamino-diphenylmethan, 4,4'-Diaminodicyclohexylmethan, 3,3'-Dimethyl-4,4'-diaminodicyclohexylmethan, 2-Nitro-4-amino-diphenylsulfon, 2-Amino-diphenylamin, 3-Amino-acetophenon, Aminonaphthaline, Diaminonaphthaline, Aminonaphthole, Aminofluorene, Aminoanthracene, Aminopyrene und insbesondere heterocyclische Aminverbindungen, wie beispielsweise Aminopyridine, Aminocarbazole, Aminochinoline, Aminopyrimidine, Aminopurine, Adenin, Aminotriazole, Aminobenzimidazole, Aminobenzimidazolone, Aminothiazole, Aminobenzthiazole, Aminopyrazole, Aminopyrazolone und Aminothiadiazole. Bevorzugt sind dabei die Amine mit einem aromatischen bzw. heteroaromatischen Ringsystem.

Geeignete Amine der Formel (III2) sind auch aliphatische Di- und Polyamine, bei welchen $R^4$ $-R^7-NR^8R^9$ oder den Rest der Formel (IIIa) oder der Formel (IIIb) bedeutet, wobei in den Formeln $R^7$, $R^8$, $R^9$, $R^{10}$, $R^{11}$, y und m die bereits aufgeführte Bedeutung haben, beispielsweise 1,2-Diaminoethan, 1,3-Diaminopropan, 1,4-Butandiamin, 1,6-Diaminohexan, Diethylentriamin, Triethylentetramin, Tetraethylenpentamin, Pentaethylenhexamin, Dipropylentriamin, 1,2-Propylendiamin, 3-Amino-1-methylaminopropan, Dimethylaminopropylamin, Diethylaminopropylamin, 3-Amino-1-(cyclohexylamino)-propan, 1-Diethylamino-4-aminopentan, Neopentandiamin, 4,9-Dioxadodecan-1,12-diamin, 4,7,10-Trioxatridecan-1,13-diamin, Bis(3-Aminopropyl)polytetrahydrofurane, letztere vorzugsweise mit einem Molekulargewicht von 750 bis 2200, N-(2-Aminoethyl)-1,3-propylendiamin, N,N'-Bis(3-aminopropyl)ethylendiamin, N,N'-Dimethyl-N,N'-bis(3-aminopropyl)ethylendiamin, N-Methylpropylendiamin, 2-Dimethylaminoethylamin, 2-Diethylaminoethylamin, N-Ethylethylendiamin, 2-Diisopropylaminoethylamin, Dimethylaminoneopentanamin, 4,7-Dioxadecan-1,10-diamin, Polyoxypropylendiamine, Nitrilotrisethanamin und Bis(3-aminopropyl)methylamin.

Geeignet sind auch Hydroxy-, Alkoxy- und Polyoxyalkylamine der Formel (III2), in der $R^4$ $-R^{12}-OR^{13}$ bedeutet, worin $R^{12}$ und $R^{13}$ die obengenannte Bedeutung haben, beispielsweise Aminoethanol, 3-Aminopropanol, 2-Amino-2-methyl-ethanol, 2-Amino-1-methyl-ethanol, 2-(2-Aminoethoxy)-ethanol, 2-(2-Aminoethylamino)ethanol, 2-Aminobutanol, 2-Aminopropanol, Neopentanolamin, N-Methyl-N-(3-aminopropyl)ethanolamin, 3-Ethoxypropylamin, 3-(2-Ethylhexoxy)propylamin und 2-Ethoxyethylamin.

Geeignete Amine der Formeln (III3) und (III4) sind mit Aminoalkyl-, Aminoalkylamino- oder Aminoalkylaminoalkyl-Gruppen substituierte carbocyclische aromatische Verbindungen oder heterocyclische Verbindungen, die am jeweiligen Ringsystem noch weitere Substituenten tragen können.

Ringsysteme sind dabei beispielsweise Benzol, Naphthalin, Triazol, Pyridin, Pyrimidin, Piperidin, Pyrrol, Pyrrolidin, Piperazin, Imidazol, Imidazolin, Morpholin, Triazin, Benzimidazol, Benzthiazol und Carbazol. Als weitere Substituenten kommen vorzugsweise folgende Gruppen in Frage:

$C_1$-$C_4$-Alkyl, Halogen wie -F, -Cl und -Br, Hydroxy, $C_1$-$C_4$-Alkoxy, Amino, Alkylamino, Dialkylamino, Carboxy, Carboalkoxy, Carbamid, Carboalkylamid, Carbodialkylamid, Alkanoylamino, N,N-Alkanoyl-alkylamino, N,N,N-Alkanoyldialkylamino, Cyano, Trifluormethyl und Nitro, wobei die jeweils angeführten Alkyl- oder Alkanoyl-Reste vorzugsweise 1 bis 4 bzw. 2 bis 5 C-Atome enthalten.

Bevorzugte Vertreter der Amine der Formel (III3) und (III4) sind beispielsweise

2-(1-Pyrrolidyl)-ethylamin, 2-(1-Piperidyl)-ethylamin, 1-(2-Aminopropyl)-piperidin, 1-(2-Aminoethyl)-piperazin, 4-(3-Aminopropyl)-morpholin, 2-(4-Morpholinyl)-ethylamin, 1-(3-Aminopropyl)-imidazol, 1-(2-Aminoethyl)-imidazolin, (2-Aminoethyl)-pyridine, Picolylamine, Tryptamin, Furfurylamin, Tetrahydrofurfurylamin, 2,5-Dihydro-2,5-dimethoxy-furfurylamin,2-Aminomethylthiophen, Benzylamin, Phenylethylamine, Methoxyphenylethylamine, 1-Methyl-3-phenylpropylamin, N-Ethyl-N-aminomethyl-3-methylanilin, 6-Phenyl-2-methylhexylamin-4 und N-Aminopropyl-benzylamin.

Bei der Herstellung bevorzugter erfindungsgemäßer Additionsverbindungen haben sich Kombinationen aus Aminen der Formel (II) und der Formeln (III1) bis (III4) bewährt, die sich in ihrer Reaktivität nicht wesentlich voneinander unterscheiden. Der Einsatz von mehr als 2 Aminen kann vorteilhaft sein. Bei der Umsetzung der Amine mit dem Polyepoxid der Formel (I) werden vorzugsweise 10 bis 90 %, insbesondere 20 bis 70 % aller Epoxygruppen des polyfunktionellen Epoxids mit primären Aminogruppen des Amins oder der Amine der Formel (II) und vorzugsweise 90 bis 10 %, insbesondere 80 bis 30 % aller Epoxygruppen

mit primären, oder sofern primäre Aminogruppen fehlen, sekundären Aminogruppen des Amins oder der Amine der Formeln (III1), (III2), (III3) und (III4) zur Reaktion gebracht. Das Verhältnis der Zahl der Epoxygruppen zur Gesamtzahl der Aminmoleküle der Formeln (II) und (III1) bis (III4) ist vorzugsweise 1 : 0,8 bis 1 : 1, insbesondere 1 : 0,9 bis 1 : 1. Ist das Verhältnis der Zahl der Epoxygruppen zur Gesamtzahl der Aminmoleküle der Formeln (II) und (III1) bis (III4) größer als 1 : 0,8 entstehen in zunehmendem Maße durch Vernetzung höhermolekulare Produkte, die sich in den verwendeten Lösemitteln nicht mehr lösen.

Für das Verfahren zur Herstellung der Additionsverbindungen gibt es verschiedene Möglichkeiten der Ausführung. Vorzugsweise wird das polyfunktionelle Epoxid der Formel (I) in einem Reaktionsschritt mit einer Mischung der einzusetzenden Amine der Formeln (II) und (III1) bis (III4) zur Reaktion gebracht. Dabei kann

a) das polyfunktionelle Epoxid vorgelegt und die Mischung der Amine rasch zugegeben werden oder vorzugsweise

b) die Mischung der Amine vorgelegt und das polyfunktionelle Epoxid zugegeben werden.

Die Herstellung der erfindungsgemäßen Additionsprodukte erfolgt in organischen Lösemitteln, die gegenüber den Reaktionspartnern inert sind oder deren Reaktivität gegenüber den Reaktionspartnern zu vernachlässigen ist und in denen die Reaktanten sowie die Reaktionsprodukte zumindest teilweise löslich, bevorzugt aber vollständig löslich sind. Zu nennen sind beispielsweise Kohlenwasserstoffe, insbesondere aromatische Kohlenwasserstoffe wie Toluol, Xylole, Ethylbenzole, chlorierte Kohlenwasserstoffe wie 1,2-Dichlorethan, Trichlorethan und insbesondere Chlorbenzole, Alkohole, vorzugsweise Butanol, Isobutanol, Pentanol und Hexanol, Ethylenglykolether und Propylenglykolether, beispielsweise Ethylenglykolmonomethylether, Ethylenglykolmonoethylether, Diethylenglykolmonomethylether, Diethylenglykolmonoethylether, Diethylenglykolmonobutylether, Ethylenglykoldimethylether, Ethylenglykoldiethylether, Diethylenglykoldimethylether, Propylenglykolmonomethylether, Propylenglykolmonoethylether, Ester wie beispielsweise N-Butylacetat, Methylglykolacetat und Ethylglykolacetat sowie Amide wie Dimethylformamid und N-Methylpyrrolidon-(2).

Die Reaktion zur Herstellung der erfindungsgemäßen Additionsverbindungen wird bei einer Temperatur von 0 °C bis 180 °C, vorzugsweise 40 °C bis 120 °C durchgeführt. Vorzugsweise werden die Reaktanten anfangs bei erhöhter Temperatur von 40 °C bis 120 °C in Kontakt gebracht. Die Lösemittel können je nach Anwendungsgebiet entweder im Reaktionsgemisch verbleiben, wobei der Festkörperanteil der Lösung vorzugsweise bis zu 40 %, insbesondere 15 bis 30 % beträgt, oder sie werden destillativ entfernt.

Sollen die erfindungsgemäßen Additionsverbindungen in Form ihrer Salze in wäßriger Lösung zur Anwendung gebracht werden, wird in der Regel vorher das organische Lösemittel im Vakuum abdestilliert und der verbleibende Rückstand vorzugsweise mit einer der Anzahl der vorhandenen basischen Gruppen entsprechenden stöchiometrischen Menge einer anorganischen oder organischen Säure neutralisiert. Bevorzugt sind Salze einer organischen Monocarbonsäure wie beispielsweise Ameisensäure, Essigsäure oder Propionsäure. Es können auch polyfunktionelle Carbonsäuren, wie beispielsweise Maleinsäure, Fumarsäure, Oxalsäure, Weinsäure oder Zitronensäure, eingesetzt werden.

Reaktionsgeschwindigkeit und Verlauf der Reaktion des polyfunktionellen Epoxids mit den eingesetzten Komponenten der Formeln (II) und (III1) bis (III4) hängt nicht allein von der Art der Reaktanten selbst und der Reaktionstemperatur, sondern auch von der Beschaffenheit des verwendeten Lösemittels ab. Gegebenenfalls ist die Anwesenheit eines Katalysators erforderlich. Geeignet sind saure und basische Katalysatoren; besonders bevorzugt sind unsubstituierte und substituierte Phenole, aromatische und aliphatische Carbonsäuren wie Salicylsäure, Benzoesäure und Milchsäure sowie Lewissäuren, beispielsweise Bortrifluorid und Aluminiumtrichlorid.

Das Ende der Reaktion läßt sich am Epoxidgehalt des Reaktionsgemisches erkennen. Der Epoxidgehalt kann IR-spektroskopisch oder als Epoxyäquivalentgewicht analytisch durch Titration ermittelt werden. Die titrimetrische Bestimmung wird so durchgeführt, daß eine genau gewogene Probe mit einem Dichlormethan/Eisessiggemisch verdünnt und mit einer bestimmten Menge eines quarternären Ammoniumhalogenidsalzes, wie z.B. Tetrabutylammoniumjodid, versetzt wird. Anschließend wird die Lösung mit Perchlorsäure in Eisessig gegen Kristallviolett als Indikator titriert, wobei die Säure Halogenwasserstoff freisetzt, der sich schnell an die Epoxygruppen addiert. Der Indikatorumschlag erfolgt, wenn kein Halogenwasserstoff mehr addiert wird und dieser demnach im Überschuß vorliegt. Zur Ermittlung des genauen Epoxyäquivalentgewichts des Reaktionsgemisches muß vor Beginn der Reaktion der Blindwert für die reinen Aminkomponenten bestimmt und bei der Titration am Ende der Reaktion berücksichtigt werden.

Besonders bevorzugt sind erfindungsgemäße Additionsprodukte, die in wasserverdünnbaren organischen Lösemittelsystemen auf die Oberfläche von Feststoffen, insbesondere Pigmenten, aufgebracht werden können, sowie deren Salze, die in wäßrigen Systemen auf die Feststoffe aufgebracht werden können. Die auf diese Art präparierten Feststoffe, insbesondere Pigmente, sind dann in organischen Medien

besonders gut dispergierbar. Verbesserte Dispergierbarkeit zeigt sich aber auch bei nachträglicher Zugabe der erfindungsgemäßen Additionsprodukte zu Feststoffen bei deren Dispergierung im organischen Medium.

Gegenstand der Erfindung ist deshalb auch die Verwendung der erfindungsgemäßen Additionsverbindungen und ihrer Salze als Dispergiermittel für Feststoffe.

Bevorzugt ist die Verwendung der erfindungsgemäßen Additionsverbindungen als Dispergiermittel für Feststoffe, insbesondere Pigmente, in organischen Medien.

Als anorganische Pigmente eignen sich beispielsweise Weiß- und Buntpigmente, wie z.B. Titandioxid, Titanoxide, Zinkoxide, Zinksulfide, Cadmiumsulfide, Cadmiumselenide, Eisenoxide, Chromoxide, Chromatpigmente, als Pigmente geeignete Mischoxide aus den Elementen Aluminium, Antimon, Chrom, Eisen, Kobalt, Kupfer, Nickel, Titan und Zink sowie Verschnittpigmente und insbesondere Ruße.

Als geeignete organische Pigmente sind beispielsweise zu nennen: Azopigmente, Azamethine, Azaporphine, Chinacridone, Flavanthron-, Anthanthron- und Pyranthronkörper, Derivate der Naphthalintetracarbonsäure, der Perylentetracarbonsäure, des Thioindigos, des Dioxazins und des Tetrachlorisoindolinons, verlackte Pigmente, wie Salze von säuregruppenhaltigen Farbstoffen mit den Elementen Magnesium, Kalzium, Strontium, Barium, Aluminium, Mangan, Kobalt und Nickel, sowie Pigmentmischungen der obengenannten Pigmente.

Es gibt mehrere Möglichkeiten, die erfindungsgemäßen Additionsverbindungen auf die Feststoffoberfläche aufzubringen. Dieser Vorgang kann während oder nach der Synthese von Pigmenten, bei einem Finishprozeß oder bei der Weiterverarbeitung des Pigments im Anwendungsmedium erfolgen. Besonders bevorzugt ist das Aufbringen der Hilfsmittel während der Pigmentsynthese oder in Verbindung mit einem Finishprozeß.

Je nach Ausführung kann das Aufbringen der erfindungsgemäßen Additionsverbindungen, im folgenden Text kurz Dispergatoren genannt, auf die Pigmente in wäßriger Suspension, in Wasser-Lösemittelgemischen und in Lösemitteln erfolgen oder es kann der Dispergator in pulverförmiger Form mit dem Pigmentpulver vermischt werden.

Zur Herstellung der Pulvergemische wird beispielsweise zunächst das Lösemittel des Dispergators abdestilliert, die zurückbleibende Wirksubstanz unter Tiefkühlung gemahlen und danach das Pigment und der Dispergator gut vermischt. Die Isolierung der Wirksubstanz des Dispergators kann auch durch andere Trocknungsverfahren erfolgen.

Zur Erzielung von optimalen rheologischen und coloristischen Eigenschaften werden die Pigmente bevorzugt mit 0,3 bis 10 mg der erfindungsgemäßen Dispergatoren pro Quadratmeter Pigmentoberfläche, insbesondere 0,6 bis 5 mg Dispergator pro Quadratmeter Pigmentoberfläche, beschichtet oder gemischt. Die Beschichtung der Pigmente in Suspension wird bei Temperaturen von 20 ° C bis zur Finishtemperatur der entsprechenden Pigmente, vorzugsweise bei 50 bis 150 ° C, innerhalb von 1 bis 6 Stunden in der 5-fachen bis 15-fachen Menge an Flüssigkeit durchgeführt. Beim Aufbringen der Wirksubstanz des Dispergators auf die Oberfläche des Pigments in wäßriger Suspension kann es vorteilhaft sein, wenn das Dispergatorlösemittel mindestens teilweise wasserlöslich ist. Nach beendetem Aufziehen des Dispergators auf die Pigmentoberfläche kann das Pigment direkt isoliert werden.

In einer weiteren bevorzugten Ausführungsform werden die Dispergatorlösemittel, z.B. Isobutanol, Toluol, Xylol oder Chlorbenzol am Ende mit Wasserdampf abdestilliert und das Pigment aus der wäßrigen Suspension isoliert.

Des weiteren kann der Dispergator vor der Applizierung in eine wäßrige Salzlösung überführt werden. Diese Überführung kann in sehr einfacher Weise durchgeführt werden, wenn der Dispergator in einem leicht mit Wasserdampf flüchtigen Lösemittel vorliegt. Die Dispergatorlösung wird dabei mit mindestens der äquivalenten Menge einer Säure, z.B. niederen Carbonsäuren wie Ameisensäure, Essigsäure oder Propionsäure, versetzt. Danach wird das Lösemittel mit Wasserdampf abdestilliert, evtl. unter gleichzeitiger Zugabe von Wasser. Die so erhaltene wäßrige Lösung des Dispergatorsalzes wird zur Pigmentsuspension gegeben und einige Zeit verrührt. Danach wird durch Zugabe von basischen Verbindungen, z.B. Natronlauge, der basische Dispergator freigesetzt und nach einer Nachrührzeit das Pigment isoliert.

Bei einer weiteren Verfahrensvariante wird die Dispergatorlösung mit mindestens der äquivalenten Menge einer Säure wie z.B. niedere Carbonsäuren versetzt und die Beschichtung der Pigmente mit dieser Lösung durchgeführt. Das Pigment kann danach direkt oder nach Freisetzen des basischen Dispergators wie oben beschrieben, vorzugsweise nach vorheriger Entfernung des Dispergatorlösemittels aus der wäßrigen Pigmentsuspension z.B. durch Wasserdampfdestillation isoliert werden.

Die Beschichtung der Pigmente wird auch vorteilhaft in Wasser/Lösemittelgemischen oder Lösemitteln, wie sie z.B. beim Pigmentfinish vorliegen, durchgeführt.

Dabei ist es günstig, wenn das Dispergatorlösemittel und das Lösemittel der Pigmentsuspension gleich sind, damit nach dem Abtrennen der Lösemittel nicht noch eine zusätzliche Fraktionierung der Lösemittel

durchgeführt werden muß.

Ist der Dispergator in dem entsprechenden Lösemittel nicht verfügbar, so ist es sinnvoll, die Wirksubstanz des Dispergators in eine anwendbare, für das jeweilige Pigment-Lösemittelsystem geeignete Form zu überführen, d.h. die Wirksubstanz zu isolieren und in einem für die Präparierung geeigneten Lösemittel zu lösen.

Die Verwendung von niederen organischen Carbonsäuren als Lösemittel empfiehlt sich besonders, da die beanspruchten Additionsverbindungen schwach basischen Charakter haben. In diesen Fällen kann es nützlich sein, nach der Präparierung die organische Säure zu neutralisieren bzw. die Pigmentsuspension schwach alkalisch zu stellen.

Es kann weiterhin von Vorteil sein, die erfindungsgemäßen Dispergatoren in Kombination mit Tensiden einzusetzen. Als Tenside eignen sich anionische, kationische und nichtionische Produkte wie z.B. Alkylsulfate, Alkylsulfonate, Alkylphosphate, Alkylbenzolsulfonate, insbesondere Laurylsulfat, Stearylsulfat, Dodecylsulfonate, Octadecylphosphate, Dodecylbenzolsulfonate und Sulfobernsteinsäureester, Kondensationsprodukte aus Fettsäure und Taurin oder Hydroxyethansulfonsäure, Harzseifen, Alkoxylierungsprodukte von Alkylphenolen, Fettalkoholen, Fettaminen, Fettsäuren und Fettsäureamiden, insbesondere Umsetzungsprodukte aus Nonylphenol, Dodecylphenol, Laurylalkohol, Cocosfettalkohol, Stearylalkohol, Oleylalkohol, Cocosfettamin, Talgfettamin, Stearylamin, Oleylamin, Cocosfettsäure, Stearinsäure oder Ölsäure mit 2 - 100 Mol, vorzugsweise 5 - 30 Mol Ethylenoxid, Umsetzungsprodukte aus oxethylierten Alkylphenolen und Fettalkoholen mit Chlorsulfonsäure und Phosphoroxichloriden. An kationischen Tensiden kommen quarternäre Ammoniumsalze wie z.B. Hexadecyltrimethylammoniumchlorid in Betracht.

Die genannten Tenside können allein oder als Mischungen eingesetzt werden.

Der Zusatz dieser Tenside kann jeweils vor, während oder nach dem Finish erfolgen, es ist aber nicht erforderlich, Tensid und Dispergator in der gleichen Stufe der Pigmentformierung zuzusetzen.

Die erfindungsgemäß präparierten Pulverpigmente zeigen in allen Lacksystemen, vor allem aber in den üblicherweise schwer pigmentierbaren Systemen wie TSA-NAD (Abk. für thermosetting acrylic - non aqueous dispersion) und "high solids" einwandfreie rheologische Eigenschaften, beispielsweise hervorragenden Glanz, gute Fließfähigkeit und gute Flockungsstabilität bei gleichzeitiger positiver Beeinflussung der coloristischen Eigenschaften, wie z.B. Transparenz bei Volltonlackierungen und Reinheit des Farbtons.

Zur Eignungsprüfung werden die in den nachfolgenden Beispielen beschriebenen Additionsprodukte entweder auf Pigmente aufgebracht oder sie werden zur Dispergierung von Feststoffen, inbesondere Pigmenten, in organischen Flüssigkeiten oder in Lacksystemen eingesetzt. Als Lacksysteme wurden aus der Vielzahl der bekannten Systeme ein Alkyd-Melaminharz-Lack (AM) auf Basis eines mittelöligen, nichttrocknenden Alkydharzes aus synthetischen Fettsäuren und Phthalsäureanhydrid und eines butanolveretherten Melaminharzes sowie ein Acrylharzeinbrennlack auf Basis einer nichtwäßrigen Dispersion (TSA-NAD) ausgewählt. An den mit diesen Lacken erstellten Einbrennlackierungen wurden die anwendungstechnischen Eigenschaften, inbesondere der Glanz, geprüft. Die Glanzmessung erfolgte an Folienaufgüssen unter einem Winkel von 20° nach DIN 67 530 (ASTM D 523) mit dem "multigloss"-Glanzmeßgerät der Firma Byk. Außerdem wurde nach der Dispergierung im Dispergierlack die Viskosität des Systems mit einem Viskospatel beurteilt. In nahezu allen Fällen führte die Verwendung der erfindungsgemäßen Additionsverbindungen zu einer deutlichen Erniedrigung der Viskosität der pigmentierten Lacke. Die Viskositätsmessungen der Additivlösungen wurden mit dem Rotationsviskosimeter RV 3 der Firma Haake durchgeführt, Viskositätsangaben beziehen sich auf eine Schergeschwindigkeit von 292,5 pro Sekunde bei 20°C. Die nachfolgenden Beispiele verdeutlichen die Herstellung sowie die Anwendung der erfindungsgemäßen Additionsverbindungen. Teile (Tle) bedeuten Gewichtsteile, sofern nichts anderes angegeben ist.

## Herstellungsbeispiel 1

In einem Rührgefäß wurden 13,9 Tle Laurylpropylendiamin (Zusammensetzung des Laurylrestes: 3 % $C_{16}$, 23 % $C_{14}$, 73 % $C_{12}$, 1 % $C_{10}$, Jodzahl < 3), 2,9 Tle 2-Amino-1,2,4-triazol und 83,5 Tle Methoxypropanol zusammengegeben und auf 70°C erwärmt. In die Lösung wurden bei dieser Temperatur 22,5 Tle eines Polyepoxids entsprechend der idealisierten Struktur in Formel (I) [R = 2-Methyl, n = 5, Epoxyäquivalent 225, Araldit (R)ECN 1273 der Firma Ciba-Geigy], gelöst in 60 Tln Methoxypropanol, rasch zugegeben und die Reaktionsmischung 5 Stunden bei 90°C gerührt. Die erhaltene Lösung war leicht gelblich gefärbt, klar, mit einer Viskosität $\eta$ = 73 mPa.s und einem Festkörperanteil von 21,5 %.

## Herstellungsbeispiel 1a

Ersetzt man in Herstellungsbeispiel 1 2-Amino-1,2,4-triazol durch 5,1 Tle 5-Aminobenzimidazolon, so

erhält man die leicht rötlich gefärbte, klare Lösung eines Produktes mit vergleichbaren anwendungstechnischen Eigenschaften (Viskosität $\eta$ = 26 mPa.s).

Herstellungsbeispiel 1b

Ersetzt man in Herstellungsbeispiel 1 2-Amino-1,2,4-triazol durch 7,6 Tle 3-Aminopyren, so erhält man die leicht bläulich gefärbte, klare Lösung eines Produktes mit ebensoguten Dispergiereigenschaften (Viskosität $\eta$ = 22 mPa.s).

Herstellungsbeispiel 1c

Ersetzt man in Herstellungsbeispiel 1 2-Amino-1,2,4-triazol durch 7,4 Tle 3-Amino-9-ethylcarbazol, so erhält man die leicht bläulich gefärbte, klare Lösung eines Produktes mit ähnlichem Dispergiervermögen (Viskosität $\eta$ = 17 mPa.s).

Herstellungsbeispiel 2

In einem Rührgefäß wurden 17,4 Tle Talgfettpropylendiamin (Zusammensetzung des Talgfettrestes: 65 % $C_{18}$, 30 % $C_{16}$, 5 % $C_{14}$, Jodzahl 36 ± 5), 4,7 Tle Anilin und 142,5 Tle Isobutanol zusammengegeben und auf 105 °C erwärmt. In die Lösung wurden bei dieser Temperatur 22,5 Tle des Polyepoxids aus Herstellungsbeispiel 1, gelöst in 80 Tln Isobutanol, zugegeben und das Reaktionsgemisch 6 Stunden bei 105 °C gerührt. Die erhaltene Lösung war schwach gelblich gefärbt und klar, mit einer Viskosität $\eta$ = 17 mPa.s und einem Feststoffgehalt von 16,7 %.

Herstellungsbeispiel 2a

Verwendet man in Herstellungsbeispiel 2 27,8 Tle Talgfettpropylendiamin und 1,9 Tle Anilin, so erhält man ein Produkt mit ähnlich guten Dispergiereigenschaften.

Herstellungsbeispiel 3

In einem Rührgefäß wurden 13 Tle Stearylamin (Zusammensetzung: 65 % $C_{18}$, 30 % $C_{16}$, 5 % $C_{14}$, Jodzahl < 4), 5,8 Tle 2-Diethylamino-ethylamin und 80,6 Tle Methoxypropanol vermischt und auf 80 °C erwärmt. In die Lösung wurden bei dieser Temperatur 23,5 Tle eines Polyepoxids entsprechend der idealisierten Struktur in Formel (I) [R = 2-Methyl, n = 6, Epoxyäquivalent 235, Araldit (R)ECN 1299 der Fa. Ciba-Geigy], gelöst in 59,8 Tln Methoxypropanol, zugefügt und die Reaktionsmischung 4 Stunden bei 80 °C gerührt. Die erhaltene Lösung war leicht gelblich gefärbt, klar, mit einer Viskosität $\eta$ = 75 mPa.s und einem Festkörperanteil von 23,2 %.

Herstellungsbeispiel 3a

Verwendet man in Herstellungsbeispiel 3 5,3 Tle Stearylamin und 9,3 Tle 2-Diethylamino-ethylamin, so erhält man ein Produkt mit vergleichbarer Dispergierwirkung.

Herstellungsbeispiel 4

In einem Rührgefäß wurden 19,1 Tle N,N-Bis(aminopropyl)-talgfettamin, 6,8 Tle Adenin, gelöst in 65 Tln N-Methylpyrrolidon, 0,7 Tle Phenol und 32,7 Tle Diethylenglykoldimethylether vermischt und auf 100 °C erwärmt.

In die Lösung wurden bei dieser Temperatur 22,5 Tle des Polyepoxids aus Herstellungsbeispiel 1, gelöst in 40 Tln Diethylenglykoldimethylether, zugegeben und die Reaktionsmischung 5 Stunden bei 120 °C gerührt.
Die erhaltene Lösung war leicht gelblich gefärbt, klar, mit einer Viskosität $\eta$ = 0,24 Pa.s und einem Feststoffanteil von 26 %.

Herstellungsbeispiel 5

In einem Rührgefäß wurden 13,9 Tle Laurylpropylendiamin, 5,9 Tle 2-Amino-6-methoxy-benzthiazol, 0,7

Tle Salicylsäure und 132,7 Tle Xylol zusammengegeben und auf 90 °C erwärmt. Anschließend wurden 22,5 Tle des Polyepoxids aus Herstellungsbeispiel 1, gelöst in 60 Tln Xylol, hinzugefügt und das Reaktionsgemisch 4 Stunden bei 100 °C gerührt. Die erhaltene Lösung war bernsteinfarben, klar, mit einer Viskosität $\eta$ = 52 mPa.s und einem Festkörpergehalt von 18 %.

Herstellungsbeispiel 6

In einem Rührgefäß wurden 14,1 Tle Oleylamin (Zusammensetzung: 83 % $C_{18}$, 12 % $C_{16}$, 4 % $C_{14}$, 1 % $C_{12}$, Jodzahl 78 ± 5), 11 Tle 4,7,10-Trioxatridecan-1,13-diamin und 100 Tle eines Gemisches bestehend aus 4 Teilen Ethylenglykolmonoethylether und 1 Tl n-Butylacetat zusammengegeben und auf 60 °C erwärmt. In die Lösung wurden bei dieser Temperatur 23,5 Tle des Polyepoxids aus Herstellungsbeispiel 3, gelöst in 90,4 Tln Methoxypropanol, zugegeben und die Reaktionsmischung 4 Stunden bei 85 °C gerührt. Die erhaltene Lösung war schwach gelblich gefärbt, klar, mit einer Viskosität $\eta$ = 28 mPa.s und einem Feststoffanteil von 20 %.

Herstellungsbeispiel 7

In einem Rührgefäß wurden 17,4 Tle Talgfettpropylendiamin, 5,4 Tle p-Toluidin und 111,2 Tle Ethylenglykolmonoethylether zusammengegeben und auf 50 °C erwärmt. In die Lösung wurden bei dieser Temperatur 22,5 Tle des Polyepoxids aus Herstellungsbeispiel 1, gelöst in 70 Tln Ethylenglykolmonoethylether, rasch zugegeben und das Reaktionsgemisch 6 Stunden bei 80 °C gerührt. Die erhaltene Lösung war bernsteinfarben, klar, mit einer Viskosität $\eta$ = 42 mPa.s und einem Festkörpergehalt von 20 %.

Herstellungsbeispiel 7a

Ersetzt man in Herstellungsbeispiel 7 p-Toluidin durch 6,2 Tle 4-Aminoanisol, so wird ein Produkt mit vergleichbarer Dispergierwirkung erhalten (Viskosität der Lösung $\eta$ = 23 mPa.s).

Herstellungsbeispiel 7b

Ersetzt man in Herstellungsbeispiel 7 p-Toluidin durch 6,8 Tle 4-Aminobenzoesäure, so erhält man ein Produkt mit geringfügig schlechteren anwendungstechnischen Eigenschaften (Viskosität der Lösung $\eta$ = 48 mPa.s).

Herstellungsbeispiel 7c

Ersetzt man in Herstellungsbeispiel 7 p-Toluidin durch 6,9 Tle 4-Nitranilin, so erhält man ein Produkt mit ebensoguten Dispergiereigenschaften (Viskosität der Lösung $\eta$ = 24 mPa.s).

Herstellungsbeispiel 7d

Ersetzt man in Herstellungsbeispiel 7 p-Toluidin durch 5,4 Tle 4-Amino-phenol, so wird ein Produkt mit ähnlicher Dispergierwirkung erhalten (Viskosität der Lösung $\eta$ = 54 mPa.s).

Herstellungsbeispiel 7e

Ersetzt man in Herstellungsbeispiel 7 p-Toluidin durch 3,4 Tle Imidazol, so erhält man ein Produkt mit ebensogutem Dispergiervermögen (Viskosität der Lösung $\eta$ = 29 mPa.s).

Herstellungsbeispiel 7f

Ersetzt man in Herstellungsbeispiel 7 p-Toluidin durch 3,7 Tle 1,3-Diaminopropan, verwendet Isobutanol als Lösemittel und führt sämtliche Reaktionsschritte bei 105 °C durch, so erhält man ein Produkt mit geringfügig schlechteren Dispergiereigenschaften (Viskosität der Lösung $\eta$ = 18 mPa.s).

Herstellungsbeispiel 7g

Ersetzt man in Herstellungsbeispiel 7 p-Toluidin durch 4,1 Tle 2-Methylimidazol und verwendet

Methoxypropanol als Lösemittel, so wird ein Produkt mit vergleichbaren Eigenschaften erhalten (Viskosität der Lösung $\eta$ = 23 mPa.s).

Herstellungsbeispiel 7h

Ersetzt man in Herstellungsbeispiel 7g 2-Methylimidazol durch 6,2 Tle 2-Aminobenzimidazol, so erhält man ein Produkt mit ebensoguten anwendungstechnischen Eigenschaften (Viskosität der Lösung $\eta$ = 58 mPa.s).

Herstellungsbeispiel 7i

Ersetzt man in Herstellungsbeispiel 7 p-Toluidin durch 7,6 Tle 4-Nitro-N-methylanilin und fügt 0,7 Tle Phenol dazu, so erhält man ein Produkt mit guten Dispergiereigenschaften (Viskosität der Lösung $\eta$ = 70 mPa.s).

Herstellungsbeispiel 7k

Ersetzt man in Herstellungsbeispiel 7 p-Toluidin durch 5,2 Tle Diethylentriamin, so wird ein Produkt mit ähnlichen anwendungstechnischen Eigenschaften erhalten (Viskosität der Lösung $\eta$ = 15 mPa.s).

Herstellungsbeispiel 7l

Ersetzt man in Herstellungsbeispiel 7 p-Toluidin durch 3,1 Tle Ethanolamin, so erhält man ein Produkt mit vergleichbarer Dispergierwirkung (Viskosität der Lösung $\eta$ = 15 mPa.s).

Herstellungsbeispiel 8

In einem Rührgefäß wurden 7,6 Tle N,N-Bis(aminopropyl)-talgfettamin, 8 Tle Talgfettamin (Zusammensetzung des Talgfettrestes: 65 % $C_{18}$, 30 % $C_{16}$, 5 % $C_{14}$, Jodzahl 45 ± 5), 3,6 Tle 3-Methoxypropylamin und 98,6 Tle n-Butanol zusammengegeben und auf 90°C erwärmt. In die Lösung wurden bei dieser Temperatur 18 Tle eines Polyepoxids gemäß der idealisierten Struktur in Formel (I) mit R = H und einem Epoxyäquivalentgewicht von 180 (Grilonit ESN 138 der Fa. EMS-Chemie), gelöst in 60 Teilen n-Butanol, zugegeben und die Reaktionsmischung 4 Stunden bei 110°C gerührt.
Die erhaltene Lösung war schwach gelblich gefärbt, klar, mit einer Viskosität $\eta$ = 71 mPa.s und einem Festkörpergehalt von 19,1 %.

Herstellungsbeispiel 9

In einem Rührgefäß wurden 14,1 Tle Oleylamin, 3,2 Tle 4-Chloranilin, 1,4 Tle Hexamethylendiamin und 125,7 Tle Ethylenglykolmonoethylether zusammengegeben und auf 65°C erwärmt. In die Lösung wurden bei dieser Temperatur 23 Tle eines Polyepoxids entsprechend der idealisierten Struktur in Formel (I) [R = 2-Methyl, n = 4,1, Epoxyäquivalent 230, Araldit (R)ECN 1280 der Fa. Ciba Geigy], gelöst in 90 Tln Methoxypropanol, zugegeben und das Reaktionsgemisch 5 Stunden bei 90°C gerührt. Die erhaltene Lösung war schwach gelblich gefärbt, klar, mit einer Viskosität $\eta$ = 65 mPa.s und einem Feststoffanteil von 16,2 %.

Herstellungsbeispiel 10

500 Teile der nach Herstellungsbeispiel 7f erhaltenen 20 %igen Dispergatorlösung in Isobutanol werden unter Rühren mit 1000 Teilen Isobutanol und 200 Teilen Ameisensäure versetzt und 30 Minuten bei 50°C verrührt. Dann werden 1000 Teile Wasser zugesetzt und das Isobutanol azeotrop abdestilliert. Die wäßrige Phase des kondensierten Azeotrops wird in den Destillationssumpf zurückgeführt.

Nach beendeter Destillation werden 190 - 200 Teile einer schwach ameisensauren, 7,5 - 8 %igen Lösung des ameisensauren Salzes des Dispergators erhalten.

Herstellungsbeispiel 11

Verfährt man wie in Herstellungsbeispiel 10, ersetzt aber die Ameisensäure durch Essigsäure, so erhält

man ca. 200 Teile ca. 8 %ige Lösung des entsprechenden essigsauren Salzes des Additivs.

Herstellungsbeispiel 12

200 Teile der nach Herstellungsbeispiel 71 erhaltenen 20 %igen Dispergatorlösung in Ethylenglykolmonoethylether werden im Vakuum eingedampft. Der zurückbleibende harzartige Rückstand wird unter Tiefkühlung z.B. durch Zusatz von festem $CO_2$ vermahlen. Man erhält ein weißes feines Pulver.

Herstellungsbeispiel 13

200 Teile einer 20 %igen Dispergatorlösung in Ethylenglykolmonoethylether, erhalten nach Herstellungsbeispiel 7k, werden unter Rühren mit 50 Teilen Wasser und 275 Teilen Propionsäure versetzt. Dann wird unter Rühren im Vakuum bei 20 - 30 Torr ein Gemisch aus Propionsäure, Wasser und Ethylenglykolmonoethylether abdestilliert.
Es resultiert eine ca. 20 %ige Lösung des Dispergators in Propionsäure.

Herstellungsbeispiel 14

200 Teile einer 20 %igen Dispergatorlösung in Ethylenglykolmonoethylether, erhalten gemäß Herstellungsbeispiel 7, werden im Vakuum zur Trockne eingedampft. Der resultierende harzartige Rückstand wird in soviel Propionsäure gelöst, daß eine 20 %ige Lösung des Dispergators erhalten wird.

Herstellungsbeispiel 15

In einem Rührgefäß wurden 9,5 Tle Talgfettpropylendiamin, 19,5 Tle Bis(3-aminopropyl)-polytetrahydrofuran 1100 und 100,4 Tle Ethylenglykolmonoethylether zusammengegeben und auf 50° C erwärmt. In die Lösung wurden bei dieser Temperatur 11,3 Tle des Polyepoxids aus Herstellungsbeispiel 1, gelöst in 60 Tln Ethylenglykolmonoethylether, zugegeben und die Reaktionsmischung 4 Stunden bei 80° C gerührt. Die erhaltene Lösung war schwach gelblich gefärbt, klar, mit einem Festkörperanteil von 20 %.

Herstellungsbeispiel 16

100 Tle der nach Herstellungsbeispiel 1 erhaltenen 21,5 %igen Dispergatorlösung wurden unter Rühren mit 32,3 Tln C.I.Pigment Yellow 154 vermischt und unter Vakuum das Lösemittel abdestilliert.
Der erhaltene Rückstand wird auf einer Labormühle zu einem feinen Pulver mit einem Wirkstoffanteil von 40 % gemahlen.

Herstellungsbeispiel 17

100 Tle der nach Herstellungsbeispiel 7f erhaltenen 20 %igen Dispergatorlösung werden unter Rühren mit 20 Tln C.I.Pigment Yellow 154 vermischt und unter Vakuum das Lösemittel abdestilliert.
Der erhaltene Rückstand wird auf einer Labormühle zu einem feinen Pulver mit 50 % Wirkstoffanteil gemahlen.

Herstellungsbeispiel 18

100 Tle der nach Herstellungsbeispiel 7g erhaltenen 20 %igen Dispergatorlösung wurden mit 2,7 Tln Eisessig versetzt, 10 Minuten bei 60° C gerührt und danach unter Vakuum das Lösemittel abdestilliert. Anschließend wurde durch Zugabe von wäßriger Essigsäure eine ca. 10 %ige klare Lösung des Dispergators hergestellt.

Herstellungsbeispiel 19

Analog Herstellungsbeispiel 18 wird mit der nach Herstellungsbeispiel 7k erhaltenen Dispergatorlösung verfahren, wobei der Feststoffgehalt der hergestellten essigsauren Lösung des Dispergators ca. 14 % beträgt.

Herstellungsbeispiel 20

In einem Rührgefäß wurden 13,5 Tle Octadecylamin, 4,9 Tle Furfurylamin und 95 Tle Diethylenglykoldimethylether zusammengegeben und auf 60°C erwärmt. In die Lösung wurden bei dieser Temperatur 22,5 Tle eines Polyepoxids entsprechend der idealisierten Struktur in Formel (I) [R = 2-Methyl, n = 5, Epoxyäquivalent 225, Araldit (R)ECN 1273 der Ciba-Geigy AG], gelöst in 50 Tln Diethylenglykoldimethylether, rasch zugegeben und die Reaktionsmischung 5 Stunden bei 90°C gerührt. Die erhaltene Lösung war leicht gelblich gefärbt, klar, mit einer Viskosität $\eta$ = 25 mPa.s und einem Feststoffanteil von 22 %.

Herstellungsbeispiel 20a

Verwendet man in Herstellungsbeispiel 20 8,1 Tle Octadecylamin und 6,9 Tle Furfurylamin, so erhält man ein Produkt mit geringfügig verbesserten anwendungstechnischen Eigenschaften.

Herstellungsbeispiel 21

In einem Rührgefäß wurden 10,2 Tle Dodecylamin, 4,2 Tle 1-Phenylethylamin und 50,7 Tle eines Gemisches bestehend aus 43,5 Tln n-Butylacetat und 7,2 Tln Methylglykolacetat zusammengegeben und auf 100°C erwärmt. In die Lösung wurden bei dieser Temperatur 22,5 Tle des Polyepoxids aus Herstellungsbeispiel 20, gelöst in 60 Tln Xylol, zugefügt und das Reaktionsgemisch 6 Stunden bei 120°C gerührt. Die erhaltene Lösung war leicht gelblich gefärbt, klar, mit einer Viskosität $\eta$ = 0,12 Pa.s und einem Feststoffanteil von 25 %.

Herstellungsbeispiel 22

In einem Rührgefäß wurden 14,1 Tle Oleylamin (Zusammensetzung: 83 % $C_{18}$, 12 % $C_{16}$, 4 % $C_{14}$, 1 % $C_{12}$, Iodzahl 78 ± 5), 6,3 Tle 1-(3-Aminopropyl)-imidazol, 0,7 Tle Salicylsäure und 125,6 Tle Ethylenglykolmonoethylether zusammengegeben und auf 70°C erwärmt. In die Lösung wurden bei dieser Temperatur 23,5 Tle eines Polyepoxids entsprechend der idealisierten Struktur in Formel (I) [R = 2-Methyl, n = 6, Epoxyäquivalent 235, Araldit (R)ECN 1299 der Ciba-Geigy AG], gelöst in 50 Tln Ethylenglykolmonoethylether, rasch zugegeben und die Reaktionsmischung 4 Stunden bei 85°C gerührt. Die erhaltene Lösung war leicht gelblich gefärbt, klar, mit einer Viskosität $\eta$ = 17 mPa.s und einem Festkörpergehalt von 20 %.

Herstellungsbeispiel 22a

Verwendet man in Herstellungsbeispiel 22 22,5 Tle des Polyepoxids aus Herstellungsbeispiel 1, so erhält man ein Produkt mit ebensoguten anwendungstechnischen Eigenschaften (Viskosität der Lösung $\eta$ = 14 mPa.s).

Herstellungsbeispiel 23

In einem Rührgefäß wurden 12,6 Tle Laurylpropylendiamin (Zusammensetzung des Laurylrestes: 3 % $C_{16}$, 23 % $C_{14}$, 73 % $C_{12}$, 1 % $C_{10}$, Iodzahl < 3), 6,5 Tle 2-(4-Morpholinyl)-ethylamin, 0,7 Tle Phenol und 100 Tle Methoxypropanol zusammengegeben und auf 80°C erwärmt. In die Lösung wurden bei dieser Temperatur 22,5 Tle des Polyepoxids aus Herstellungsbeispiel 20, gelöst in 56,5 Tln Methoxypropanol, zugefügt und das Reaktionsgemisch 5 Stunden bei 90°C gerührt. Die erhaltene Lösung war leicht gelblich gefärbt, klar, mit einer Viskosität $\eta$ = 21 mPa.s und einem Feststoffanteil von 21 %.

Herstellungsbeispiel 23a

Verwendet man in Herstellungsbeispiel 23 20,1 Tle Laurylpropylendiamin und 2,6 Tle 2-(4-Morpholinyl)-ethylamin, so erhält man ein Produkt mit ähnlichen anwendungstechnischen Eigenschaften.

Herstellungsbeispiel 24

In einem Rührgefäß wurden 19,1 Tle Talgfettpropylendiamin (Zusammensetzung des Talgfettrestes: 65 % $C_{18}$, 30 % $c_{16}$, 5 % $C_{14}$, Iodzahl 36 ± 5), 4,0 Tle 2-(1-Pyrrolidyl)-ethylamin und 122,4 Tle Ethylenglykolmonoethylether zusammengegeben und auf 50°C erwärmt. In die Lösung wurden bei dieser Temperatur 22,5 Tle des Polyepoxids aus Herstellungsbeispiel 20, gelöst in 60 Tln Ethylenglykolmonoethylether, zugegeben und das Reaktionsgemisch 4 Stunden bei 80°C gerührt. Die erhaltene Lösung war leicht

gelblich gefärbt, klar, mit einer Viskosität $\eta$ = 15 mPa.s und einem Festkörpergehalt von 20 %.

Herstellungsbeispiel 24a

Ersetzt man in Herstellungsbeispiel 24 2-(1-Pyrrolidyl)-ethylamin durch 4,3 Tle 4-(2-Aminoethyl)-pyridin, so erhält man ein Produkt mit vergleichbaren Dispergiereigenschaften (Viskosität der Lösung $\eta$ = 28 mPa.s).

Herstellungsbeispiel 24b

Ersetzt man in Herstellungsbeispiel 24 2-(1-Pyrrolidyl)-ethylamin durch 4,3 Tle 1-(2-Aminoethyl)-piperazin, so erhält man ein Produkt mit ähnlichen anwendungstechnischen Eigenschaften (Viskosität der Lösung $\eta$ = 23 mPa.s).

Herstellungsbeispiel 24c

Ersetzt man in Herstellungsbeispiel 24 2-(1-Pyrrolidyl)-ethylamin durch 5,0 Tle 4-(3-Aminopropyl)-morpholin, so erhält man ein Produkt mit ebensoguter Dispergierwirkung (Viskosität der Lösung $\eta$ = 14 mPa.s).

Herstellungsbeispiel 25

In einem Rührgefäß wurden 19,1 Tle Talgfettpropylendiamin, 4,4 Tle 1-(3-Aminopropyl)-imidazol, 0,7 Tle Phenol und 47,3 Tle Xylol zusammengegeben und auf 80° C erwärmt. In die Lösung wurden bei dieser Temperatur 22,5 Tle des Polyepoxids aus Herstellungsbeispiel 20, gelöst in 60 Tln Xylol, rasch zugegeben und die Reaktionsmischung 4 Stunden bei 100° C gerührt. Die erhaltene Lösung war bernsteinfarben, klar, mit einer Viskosität $\eta$ = 0,41 Pa.s und einem Feststoffanteil von 30 %.

Herstellungsbeispiel 25a

Ersetzt man in Herstellungsbeispiel 25 Xylol durch Ethylenglykolmonoethylether und läßt bei 80° C reagieren, so erhält man ein Produkt mit vergleichbaren Dispergiereigenschaften (Viskosität der Lösung $\eta$ = 0,37 Pa.s).

Herstellungsbeispiel 25b

Ersetzt man in Herstellungsbeispiel 25 Xylol durch Isobutanol und führt sämtliche Reaktionsschritte bei 105° C durch, so erhält man ein Produkt mit ebensoguter Dispergierwirkung (Viskosität der Lösung $\eta$ = 0,26 Pa.s).

Herstellungsbeispiel 25c

Verwendet man in Herstellungsbeispiel 25 18 Tle eines Polyepoxids entsprechend der idealisierten Struktur in Formel (I) mit R = H und einem Epoxyäquivalent von 180 (Grilonit ESN 138 der Fa. EMS-Chemie), so erhält man ein Produkt mit geringfügig schlechteren anwendungstechnischen Eigenschaften.

Herstellungsbeispiel 26

In einem Rührgefäß wurden 7,6 Tle N,N-Bis(aminopropyl)-talgfettamin, 8,5 Tle Oleylamin, 5,5 Tle 4-Methoxybenzylamin und 80 Tle Pentanol zusammengegeben und auf 100° C erwärmt. In die Lösung wurden bei dieser Temperatur 18 Tle des Polyepoxids aus Herstellungsbeispiel 25c, gelöst in 57,2 Tln Pentanol, zugegeben und die Reaktionsmischung 5 Stunden bei 110° C gerührt. Die erhaltene Lösung war leicht gelblich gefärbt, klar, mit einer Viskosität $\eta$ = 79 mPa.s und einem Festkörpergehalt von 22,4 %.

Herstellungsbeispiel 27

In einem Rührgefäß wurden 13,1 Tle Stearylamin (Zusammensetzung: 65 % $C_{18}$, 30 % $C_{16}$, 5 % $C_{14}$, Iodzahl < 4), 3,2 Tle 2-(1-Piperidyl)ethylamin, 2,8 Tle 2-Aminomethylthiophen und 50,4 Tle Diethylenglykoldimethylether zusammengegeben und auf 70° C erwärmt. In die Lösung wurden bei dieser Temperatur 23 Tle eines Polyepoxids entsprechend der idealisierten Struktur in Formel (I) [R = 2-Methyl, n = 4,1, Epoxyäquivalent 230, Araldit (R)ECN 1280 der Ciba-Geigy AG], gelöst in 60 Tln Methoxypropanol, zugegeben und das Reaktionsgemisch 4 Stunden bei 95° C gerührt. Die erhaltene Lösung war bernsteinfarben, klar, mit einer Viskosität $\eta$ = 0,12 Pa.s und einem Feststoffanteil von 27,6 %.

Herstellungsbeispiel 28

500 Teile der nach Herstellungsbeispiel 25b erhaltenen 30 %igen Dispergatorlösung in Isobutanol werden unter Rühren mit 1000 Teilen Isobutanol und 200 Teilen Ameisensäure versetzt und 30 Minuten bei 50° C verrührt. Dann werden 1000 Teile Wasser zugesetzt und das Isobutanol azeotrop abdestilliert. Die wäßrige Phase des kondensierten Azeotrops wird in den Destillationssumpf zurückgeführt. Nach beendeter Destillation werden 190 - 200 Teile einer schwach ameisensauren ca. 8 %igen Lösung des ameisensauren Salzes des Dispergators erhalten.

Herstellungsbeispiel 29

Verfährt man wie in Herstellungsbeispiel 28, ersetzt aber die Ameisensäure durch Essigsäure, so erhält man ca. 200 Teile ca. 8 %ige Lösung des entsprechenden essigsauren Salzes des Dispergators.

Herstellungsbeispiel 30

200 Teile der nach Herstellungsbeispiel 24b erhaltenen 20 %igen Dispergatorlösung in Ethylenglykolmonoethylether werden im Vakuum eingedampft. Der zurückbleibende harzartige Rückstand wird unter Tiefkühlung z.B. durch Zusatz von festem $CO_2$ vermahlen. Man erhält ein weißes feines Pulver.

Herstellungsbeispiel 31

200 Teile einer 21 %igen Dispergatorlösung in Methoxypropanol, erhalten nach Herstellungsbeispiel 23, werden unter Rühren mit 50 Teilen Wasser und 275 Teilen Propionsäure versetzt. Dann wird unter Rühren im Vakuum bei 20 - 30 Torr ein Gemisch aus Methoxypropanol, Wasser und Propionsäure abdestilliert. Es resultiert eine ca. 20 %ige Lösung des Dispergators in Propionsäure.

Herstellungsbeispiel 32

200 Teile einer 20 %igen Dispergatorlösung in Ethylenglykolmonoethylether, erhalten gemäß Herstellungsbeispiel 24c, werden im Vakuum zur Trockene eingedampft. Der resultierende harzartige Rückstand wird in soviel Propionsäure gelöst, daß eine 20 %ige Lösung des Dispergators erhalten wird.

Herstellungsbeispiel 33

200 Teile einer 30 %igen Dispergatorlösung in Isobutanol, erhalten gemäß Herstellungsbeispiel 25c, werden im Vakuum zur Trockne eingedampft. Der resultierende harzartige Rückstand wird auf einer Labormühle unter Zusatz von Trockeneis zu einem feinen Pulver vermahlen.

Herstellungsbeispiel 34

100 Teile der nach Herstellungsbeispiel 23 erhaltenen 21 %igen Dispergatorlösung werden mit 4,1 Teilen Eisessig versetzt, 10 Minuten bei 60° C verrührt und danach unter Vakuum das Lösemittel abdestilliert. Anschließend wird bei 60° C eine 15,7 %ige wäßrige Lösung des Dispergators hergestellt.

Herstellungsbeispiel 35

100 Teile der nach Herstellungsbeispiel 24 erhaltenen 20 %igen Dispergatorlösung werden unter Rühren mit 30 Teilen C.I. Pigment Yellow 154 vermischt und das Lösemittel unter Vakuum abdestilliert. Der erhaltene Rückstand wird auf einer Labormühle zu einem feinen Pulver mit 40 % Wirkstoffanteil gemahlen.

Anwendungsbeispiel 1

In 100 Tln AM- bzw. TSA-NAD-Lack wurden 10 Tle C.I.Pigment Yellow 154 (spez. Oberfläche nach BET 24 $m^2/g$) unter Zusatz der Lösung des Additionsproduktes aus dem jeweils angegebenen Herstellungsbeispiel (1,5 Tle 100 %iges Additionsprodukt) dispergiert, die damit erstellten Lackierungen eingebrannt und der Glanz gemessen.

| Herstellungsbeispiel | Glanz (AM) | Glanz (TSA-NAD) |
|---|---|---|
| 1 | 87 | 81 |
| 2 | 85 | |
| 3 | 82 | |
| 4 | 80 | |
| 6 | 86 | |
| 7 | 87 | |
| 7a | 85 | |
| 7b | 84 | |
| 7c | 88 | 83 |
| 7d | 86 | 81 |
| 7e | 83 | |
| 7f | 85 | 88 |
| 7g | 86 | |
| 7i | 83 | |
| 9 | 83 | |
| 22 | 91 | 81 |
| 22a | 89 | 85 |
| 23 | 88 | 88 |
| 24 | 85 | 84 |
| 24a | 88 | 85 |
| 24b | 88 | 83 |
| 24c | 84 | - |
| 25 | 80 | - |
| 25a | 84 | - |
| EP-A-0044816, Bsp.8 | 5 | - |
| US-3853770, Bsp. 4 | 42 | - |
| Vergleich ohne Zusatz | 30 | 30 |

Anwendungsbeispiel 2

In 100 Tln AM- bzw. TSA-NAD-Lack wurden 4 Tle C.I.Pigment Red 122 (spez. Oberfläche nach BET 62 $m^2/g$) unter Zusatz der Lösung des Additionsproduktes aus dem in der Tabelle jeweils angegebenen Herstellungsbeispiel (0,4 Tle 100 %iges Additionsprodukt) dispergiert, die damit erstellten Lackierungen eingebrannt und der Glanz gemessen.

| Herstellungsbeispiel | Glanz (AM) | Glanz (TSA-NAD) |
|---|---|---|
| 1 | 100 | |
| 1a | 90 | |
| 1b | 86 | |
| 1c | 100 | 86 |
| 2 | 95 | |
| 3 | 89 | |
| 5 | 86 | |
| 6 | 91 | |
| 7 | 98 | |
| 7a | 100 | 88 |
| 7c | 100 | 87 |
| 7d | 100 | |
| 7e | 96 | 85 |
| 7f | 96 | |
| 7g | 92 | 85 |
| 7h | 92 | 86 |
| 7k | 87 | |
| 7l | 89 | |
| 8 | 80 | |
| 20 | 84 | - |
| 22 | 93 | 91 |
| 22a | 95 | 93 |
| 23 | 92 | 91 |
| 24 | 98 | - |
| 24a | 97 | - |
| 24b | 94 | 88 |
| 24c | 96 | |
| 25a | 90 | 87 |
| 25b | 100 | - |
| 25c | 84 | - |
| 26 | 82 | - |
| 27 | 86 | - |
| EP-A-0044816, Bsp.3 | 36 | - |
| US-3853770, Bsp. 4 | 30 | - |
| Vergleich ohne Zusatz | 27 | 53 |

Anwendungsbeispiel 3

In 100 Tln AM- bzw. TSA-NAD-Lack wurden 7 Tle C.I.Pigment Violet 19 (spez. Oberfläche nach BET 34 $m^2/g$) unter Zusatz der Lösung des Additionsproduktes aus dem jeweils in der Tabelle angegebenen Herstellungsbeispiel (0,7 Tle 100 %iges Additionsprodukt) dispergiert, die damit erstellten Lackierungen eingebrannt und der Glanz gemessen.

| Herstellungsbeispiel | Glanz (AM) | Glanz (TSA-NAD) |
|---|---|---|
| 1 | 82 | 78 |
| 1b | 83 | |
| 1c | 87 | |
| 2 | 83 | |
| 7 | 82 | 77 |
| 7a | 84 | 77 |
| 7b | 82 | |
| 7c | 87 | |
| 7d | 84 | |
| 7f | 85 | |
| 7g | 83 | |
| 7k | 84 | |
| 7l | 85 | |
| 22 | 86 | 80 |
| 22a | 93 | 85 |
| 23 | 85 | - |
| 24 | 84 | 81 |
| 24a | 83 | - |
| 24b | 82 | - |
| 24c | 82 | 81 |
| 25a | 82 | - |
| EP-A-0044816, Bsp.3 | 58 | - |
| US-3853770, Bsp. 4 | 27 | - |
| Vergleich ohne Zusatz | 18 | 34 |

Anwendungsbeispiel 4

In 100 Tln AM- bzw. TSA-NAD-Lack wurden 3 Tle C.I.Pigment Violet 23 (spez. Oberfläche nach BET 86 $m^2/g$) unter Zusatz der Lösung des Additionsproduktes aus Herstellungsbeispiel 1c (0,6 Tle 100 %iges Additionsprodukt) dispergiert und an den damit erstellten Lackierungen Glanzwerte von 90 (AM) bzw. 80 (TSA-NAD) gemessen. Wurde die Lösung des Additionsproduktes aus Herstellungsbeispiel 1c durch Lösemittel ersetzt, wurden Lackierungen mit den Glanzwerten 68 bzw. 42 erhalten.

Anwendungsbeispiel 5

In 100 Tln TSA-NAD-Lack wurden 4 Tle C.I.Pigment Orange 43 (spez. Oberfläche nach BET 46 $m^2/g$) unter Zusatz der Lösung des Additionsproduktes aus Herstellungsbeispiel 1c (0,4 Tle 100 %iges Additionsprodukt) dispergiert und an der damit erstellten Lackierung ein Glanzwert von 80 gemessen. Wurde die Lösung des Additionsproduktes aus Herstellungsbeispiel 1c durch Lösemittel ersetzt, wurde eine Lackierung mit dem Glanzwert 59 erhalten.

Anwendungsbeispiel 6

In 100 Tln AM-Lack wurden 5 Tle C.I.Pigment Red 194 (spez. Oberfläche nach BET 18 $m^2/g$) unter Zusatz der Lösung des Additionsproduktes aus Herstellungsbeispiel 1c (0,5 Tle 100 %iges Additionsprodukt) dispergiert und an der damit erstellten Lackierung ein Glanzwert von 81 gemessen. Wurde die Lösung des Additionsproduktes aus Herstellungsbeispiel 1c durch Lösemittel ersetzt, wurde eine Lackierung mit dem Glanzwert 30 erhalten.

Anwendungsbeispiel 7

400 Teile einer wäßrigen Pigmentsuspension - Pigmentgehalt 7,8 % - der deckenden $\gamma$-Modifikation von C.I.Pigment Violet 19, C.I.-Nr. 73900 werden unter Rühren bei 50 °C mit 9,35 Teilen der 20 %igen Dispergatorlösung, erhalten gemäß Herstellungsbeispiel 7a, verdünnt mit 18,7 Tln Ethylenglykolmonoethylether, innerhalb 45 Minuten versetzt. Anschließend wird 4 Stunden bei 50 - 60 °C gerührt und dann das

Pigment isoliert.
Es werden 32,7 Teile eines deckenden, rheologisch einwandfreien blaustichigroten Pigments erhalten. Zum Vergleich wurde ein Pigment unter sonst gleichen Bedingungen, aber ohne Zusatz von Dispergator, hergestellt. Die Vergleichsfärbung ist in Volltonlacken deutlich matter mit milchigem Schleier.

Glanzwert (AM-Lack) : 84
Unpräparierter Vergleich : 28

Anwendungsbeispiel 8

500 Teile einer wäßrig-isobutanolischen Pigmentsuspension - Pigmentgehalt 8,8 %, Isobutanolgehalt 35 % - der $\gamma$-Modifikation von C.I:Pigment Violet 19, C.I. Nr. 73900 werden bei 70° C in 30 Minuten mit 33 Teilen der ameisensauren 8 %igen Dispergatorlösung aus Herstellungsbeispiel 10 versetzt und 2 Stunden bei 70° C verrührt. Danach wird mit 10 %iger Natronlauge die Suspension auf pH 9 - 9,5 gestellt und weitere 3 Stunden bei 70° C gerührt. Danach wird das Pigment isoliert und getrocknet.

Glanzwert (AM-Lack) : 83
Unpräparierter Vergleich : 28

Anwendungsbeispiel 9

400 Teile einer schwach alkalischen wäßrigisobutanolischen Pigmentsuspension (Isobutanolgehalt 60 %; 0,5 % NaOH) mit einem Pigmentgehalt von 8 % C.I.Pigment Red 122 (C.I.-Nr. 73915) werden auf 75° C geheizt. Unter Rühren wird dann durch Zugabe von 50 %iger Propionsäure auf pH 6,5 gestellt. Anschließend werden 14,55 Teile der nach Herstellungsbeispiel 13 erhaltenen Dispergatorlösung in 30 Minuten zugetropft und 2 Stunden bei 75° C verrührt. Dann wird mit 10 %iger Natronlauge auf pH 9 - 10 gestellt, weitere 3 Stunden bei 75° C gerührt und das Pigment isoliert. Es wird ein Chinacridonmagenta mit hervorragenden rheologischen Eigenschaften erhalten.

Glanzwert (AM-Lack) : 92
Unpräparierter Vergleich : 37

Anwendungsbeispiel 10

1000 Teile einer Pigmentsuspension - Pigmentgehalt 8 % eines Chinacridonmischkristalls aus 3 Teilen C.I.Pigment Red 122, C.I.Nr. 73915 und 1 Teil C.I.Pigment Violet 19, C.I.Nr. 73900 im Kristallgitter von C.I.Pigment Red 122 - mit einem Isobutanolgehalt von 30 % werden bei 50° C unter Rühren mit 37,2 Teilen einer Dispergatorlösung gemäß Herstellungsbeispiel 1, verdünnt mit 74 Teilen Isobutanol, in 30 Minuten versetzt und anschließend 3 Stunden bei 50 - 60° C verrührt. Danach wird das Isobutanol mit Wasserdampf abdestilliert und das Pigment isoliert.

Es wird ein hochwertiges Chinacridonmagenta mit hervorragenden rheologischen und coloristischen Eigenschaften erhalten.

Glanzwert (AM-Lack) : 94
Unpräparierter Vergleich : 49

Anwendungsbeispiel 11

500 Teile einer isobutanolischen Suspension von C.I.Pigment Red 122 (C.I.Nr. 73915) - Pigmentgehalt 7,5 %, Isobutanolgehalt 50 % - werden bei Siedetemperatur mit 21,5 Teilen der gemäß Herstellungsbeispiel 1a erhaltenen 21,5 %igen Dispergatorlösung, verdünnt mit 45 Teilen Isobutanol, in 60 Minuten versetzt und 3 Stunden bei Siedetemperatur gerührt. Danach wird das Isobutanol mit Wasserdampf abdestilliert und das Pigment isoliert.

Es wird ein rheologisch einwandfreies Chinacridonmagenta erhalten.

Glanzwert (AM-Lack) : 98
Unpräparierter Vergleich : 28

Anwendungsbeispiel 12

Verfährt man wie in Anwendungsbeispiel 9 beschrieben, setzt aber an Stelle des dort verwendeten Dispergators 14,55 Teile Dispergator, erhalten gemäß Herstellungsbeispiel 14, ein, so erhält man mit gleich guter Ausbeute ein Pigment mit ähnlich guten Eigenschaften.

Glanzwert : 89
Unpräparierter Vergleich : 37

Anwendungsbeispiel 13

Setzt man an Stelle der in Anwendungsbeispiel 11 verwendeten Dispergatorlösung 18,75 Teile der nach Herstellungsbeispiel 7e erhaltenen Dispergatorlösung bei sonst gleicher Arbeitsweise ein, erhält man ebenfalls ein rheologisch und coloristisch einwandfreies Magenta.
Glanzwert : 96
Unpräparierter Vergleich : 28

Anwendungsbeispiel 14

Verfährt man wie in Anwendungsbeispiel 10 beschrieben, setzt aber an Stelle des dort verwendeten Dispergators 40 Teile Dispergator, erhalten gemäß Herstellungsbeispiel 7i, ein, so erhält man mit gleich guter Ausbeute ein Pigment mit ähnlich guten Eigenschaften.
Glanzwert : 98
Unpräparierter Vergleich : 49

Anwendungsbeispiel 15

Setzt man an Stelle der in Anwendungsbeispiel 10 verwendeten Dispergatorlösung 36 Teile der nach Herstellungsbeispiel 7k erhaltenen Dispergatorlösung bei sonst gleicher Arbeitsweise ein, erhält man ebenfalls ein Chinacridonmagenta mit hervorragenden Eigenschaften im Lack.
Glanzwert : 89
Unpräparierter Vergleich : 49

Anwendungsbeispiel 16

Wird der in Anwendungsbeispiel 10 eingesetzte Dispergator durch 40 Teile des nach Herstellungsbeispiel 7l erhaltenen Dispergators ersetzt und führt man die Präparierung bei sonst gleicher Arbeitsweise aus, erhält man ein rheologisch absolut einwandfreies Chinacridonpigment mit hervorragenden coloristischen Eigenschaften.
Glanzwert : 100
Unpräparierter Vergleich : 49

Anwendungsbeispiel 17

550 Teile einer wäßrig-isobutanolischen Pigmentsuspension - Pigmentgehalt 8 % der $\gamma$-Modifikation von C.I.Pigment Violet 19, C.I.Nr. 73900, Isobutanolgehalt 35 % - werden auf 75 °C erhitzt und unter Rühren bei dieser Temperatur mit 19,8 Tln einer Dispergatorlösung gemäß Herstellungsbeispiel 2, verdünnt mit 19,8 Tln Isobutanol, in 30 Minuten versetzt. Danach wird 2 Stunden bei 75 °C gerührt und anschließend in 30 Minuten eine Lösung aus 1,32 Tln Nonylphenolpolyglykolether (HLB-Wert 13) und 15 Tln Isobutanol zugetropft. Nach 2 stündigem Rühren bei 75 °C wird das Isobutanol mit Wasserdampf abdestilliert. Das isolierte und getrocknete blaustichig-rote Pigment zeigt im AM-Lack einwandfreies rheologisches Verhalten.
Glanzwert : 85
Unpräparierter Vergleich : 28

Anwendungsbeispiel 18

500 Tle einer alkalischen wäßrig-alkoholischen Suspension der $\beta$-Modifikation von C.I.Pigment Violet 19, C.I.Nr. 73900 - Pigmentgehalt 8 %, Ethylalkohol 10 %, NaOH 0,5 % - werden auf 80 °C erwärmt und in 10 Minuten mit einer Lösung aus 2 Tln Tributylphenolpolyglykolethersulfat (Ethoxylierungsgrad 7-8), 50 %ig in schwach alkalischem Wasser, versetzt und 1 Stunde verrührt. Danach wird in 30 Minuten mit verd. Salzsäure angesäuert, 15 Minuten nachgerührt, das Pigment abfiltriert und neutral gewaschen. Das neutrale wäßrig-feuchte Pigment wird in 500 Tln Wasser bei 50 °C suspendiert und in 0,5 Stunden mit 18,9 Tln Pigmentdispergator gemäß Herstellungsbeispiel 3a, vermischt mit 40 Tln Methoxypropanol, versetzt. Anschließend wird 3 Stunden bei 50-60 °C gerührt, das Pigment isoliert und getrocknet.

Glanzwert (AM-Lack) : 88
Unpräparierter Vergleich : 72

Anwendungsbeispiel 19

100 Tle Indanthren-Bordo RR (C.I.Vat Red 15, C.I.Nr. 71100) von 98-99 %iger Reinheit - erhalten durch Ausfällen von Indanthren-Bordo RR aus alkalisch-wäßriger Lösung durch Zugabe von Salzsäure und nachfolgendem Isolieren, Waschen und Trocknen des Produktes - werden in gemahlener Form in 1560 Tle Chlorbenzol eingerührt. Danach wird mit 4 Tln 33 %iger NaOH versetzt und 1 Stunde bei 20-30°C nachgerührt. Anschließend erwärmt man langsam zum Sieden und erhitzt 2 Stunden am Rückfluß. Nach Abkühlung auf 75°C gibt man 50 Tle Pigmentdispergator, erhalten nach Herstellungsbeispiel 7f, zu und rührt 1 Stunde bei 70-80°C. Anschließend gibt man Wasser zu und destilliert das Chlorbenzol mit Wasserdampf ab. Das Pigment wird abfiltriert, neutral gewaschen und bei 60°C getrocknet. Das erhaltene gelbstichig-rote Pigment besitzt einwandfreie anwendungstechnische Eigenschaften.
Glanzwert (AM-Lack) : 80
Unpräparierter Vergleich : 30

Anwendungsbeispiel 20

10 Teile C.I.Pigment Yellow 154 und 3,75 Tle des nach Herstellungsbeispiel 16 erhaltenen Dispergators werden innerhalb von 3 Stunden auf einer Rollbank gemischt. Der Folienaufguß der Probe (AM-Lack) liefert einen Glanzwert von 80, während die unpräparierte Vergleichsprobe einen Wert von 38 ergibt.

Anwendungsbeispiel 21

Verfährt man wie in Anwendungsbeispiel 20, verwendet jedoch 3 Teile Dispergator, erhalten gemäß Herstellungsbeispiel 17, so ergibt der Folienaufguß der Probe denselben Glanzwert.

Anwendungsbeispiel 22

100 Teile eines 24 %igen wäßrigen Preßkuchens von C.I.Pigment Yellow 154 werden in 226,5 Teilen Wasser verrührt und anschließend der Pigmentsuspension 60,3 Teile einer Mischung aus 56,7 Teilen Isobutanol und 3,6 Teilen der nach Herstellungsbeispiel 15 erhaltenen Dispergatorlösung zugesetzt. Die Suspension wird auf 88°C erhitzt und 1 Stunde bei dieser Temperatur gehalten. Danach wird das Lösemittel durch Wasserdampfdestillation entfernt, das Pigment isoliert, getrocknet und gemahlen.
Glanzwert (AM-Lack) : 81
Unpräparierter Vergleich : 33

Anwendungsbeispiel 23

Zu 100 Teilen einer 5 %igen wäßrigen Pigmentsuspension von C.I.Pigment Yellow 154 werden bei Raumtemperatur 0,05 Teile eines Emulgators, bestehend aus einem aliphatischen $C_{12}$-$C_{18}$-Kohlenwasserstoffgemisch und dessen Sulfamidoessigsaurem Natriumsalz, sowie innerhalb von 3 Minuten 5 Teile der nach Herstellungsbeispiel 18 erhaltenen Dispergatorlösung zugetropft und 30 Minuten nachgerührt. Danach wird auf 60°C erwärmt, mit 6 %iger Natronlauge auf pH 9,5 eingestellt und 90 Minuten bei dieser Temperatur nachgerührt. Anschließend wird das Pigment heiß abfiltriert, gewaschen und getrocknet.
Glanzwert (AM-Lack) : 80
Unpräparierter Vergleich : 33

Anwendungsbeispiel 24

Verfährt man wie in Anwendungsbeispiel 23, verzichtet jedoch auf den dort eingesetzten Emulgator und verwendet 3,6 Teile der nach Herstellungsbeispiel 19 hergestellten Dispergatorlösung, erhält man ein Pigment mit vergleichbaren anwendungstechnischen Eigenschaften.

Anwendungsbeispiel 25

200 Teile eines 29,3 %igen wäßrigen Preßkuchens von C.I.Pigment Red 188 C.I.-Nr. 12467 werden in

500 Teilen Wasser verrührt und der erhaltenen Pigmentsuspension 270 Teile Chlorbenzol zugesetzt, dem 18 Teile der nach Herstellungsbeispiel 15 erhaltenen Dispergatorlösung beigemischt sind. Unter Rühren wird die Suspension auf 90°C erhitzt und 4 Stunden bei dieser Temperatur gehalten. Anschließend wird das Lösemittel durch Wasserdampfdestillation entfernt, das Pigment isoliert, getrocknet und gemahlen.

Glanz (AM-Lack) : 84
Unpräparierter Vergleich : 45

Anwendungsbeispiel 26

1000 Teile einer wäßrigen Pigmentsuspension (Pigmentgehalt 6 %) der deckenden $\gamma$-Kristallmodifikation von C.I. Pigment Violet 19, C.I. Nr. 73900 werden bei 50 °C im Verlauf von einer Stunde mit 16,4 Teilen der nach Herstellungsbeispiel 20 erhaltenen 22 %igen Dispergatorlösung, verdünnt mit 24 Teilen Isobutanol, versetzt. Nach 3 stündigem Nachrühren wird das Isobutanol mit Wasserdampf abdestilliert, das Pigment abfiltriert, mit Wasser gewaschen und getrocknet. Es werden 62,5 Teile eines blaustichig-roten Pigmentpulvers erhalten. Zum Vergleich wurde ein Pigment unter sonst gleichen Bedingungen, aber ohne Zusatz von Dispergator, hergestellt. Die Vergleichsfärbung ist in Volltonlacken deutlich matter mit milchigem Schleier. Die Glanzmessung an Folienaufgüssen (AM-Lack) liefert folgende Werte:

Pigment nach Anwendungsbeispiel 26 : 80
Vergleichsbeispiel : 29

Anwendungsbeispiel 27

Zu 1000 Teilen einer wäßrigen Pigmentsuspension der deckenden $\gamma$-Kristallmodifikation von Pigment Violet 19, C.I.-Nr. 73900 werden bei 60 - 65°C in einer Stunde 48 Teile der nach Herstellungsbeispiel 28 erhaltenen Dispergatorlösung unter Rühren zugetropft. Nach 2stündigem Nachrühren bei 60 - 65°C wird in 30 Minuten mit 10 %iger Natronlauge auf einen pH-Wert von 9 - 9,5 gestellt, anschließend wird noch 2 Stunden bei dieser Temperatur gerührt, das Pigment durch Filtration abgetrennt, mit Wasser gewaschen und bei 80 - 100°C getrocknet. Man erhält im AM-Lack einen Glanzwert von 81.

Anwendungsbeispiel 28

Verfährt man wie in Anwendungsbeispiel 26 beschrieben, setzt aber 1000 Teile einer wäßrig-isobutanolischen Pigmentsuspension (Pigmentgehalt 6 %, Isobutanolgehalt 35 - 40 %) bei sonst gleicher Arbeitsweise ein, so erhält man mit einer Ausbeute von über 98 % ein blaustichigrotes Pigment, welches zu einer hochdeckenden, schleierfreien Volltonlackierung im TSA-NAD-Lacksystem mit ausgezeichnetem Glanz und hervorragender Viskosität des Lackes führt. Bei der Glanzmessung des Folienaufgusses wurde ein Wert von 85 ermittelt.

Anwendungsbeispiel 29

200 Teile einer schwach alkalischen wäßrig-isobutanolischen Pigmentsuspension (Isobutanolgehalt 60 %; 0,5 % NaOH) mit einem Pigmentgehalt von 8 % C.I.-Pigment Red 122, C.I.Nr. 73915 werden auf 75°C geheizt und unter Rühren durch Zugabe von 50 %iger Propionsäure auf einen pH-Wert von 6,5 - 7 gestellt. Anschließend werden 9 Teile der nach Herstellungsbeispiel 31 erhaltenen ca. 20 %igen Dispergatorlösung langsam zugegeben und 2 Stunden bei 70 - 75°C verrührt. Danach wird bei dieser Temperatur innerhalb 45 Minuten mit 20 %iger Natronlauge auf pH 9,5 gestellt und 2 Stunden bei 70 - 75°C nachgerührt. Dann wird das Pigment abfiltriert, mit Wasser gewaschen und getrocknet. Es werden 19 Teile eines Magenta-Pigments mit ausgezeichneten rheologischen und coloristischen Eigenschaften erhalten. Bei der Glanzmessung des Vollton-Folienaufgusses (AM-Lack) wurden folgende Werte erhalten:

Pigment nach Anwendungsbeispiel 29 : 88
Vergleichsbeispiel unpräpariert : 23

Anwendungsbeispiel 30

500 Teile einer 7 %igen wäßrigen Suspension der $\beta$-Kristallmodifikation von C.I. Pigment Violet 19, C.I.-Nr. 73900 werden bei 70°C langsam mit 44 Teilen der nach Herstellungsbeispiel 29 erhaltenen Dispergatorlösung versetzt. Anschließend wird 5 Stunden bei 70°C verrührt, dann mit wässriger Natronlauge innerhalb 45 Minuten auf pH 9 - 9,5 gestellt, 1 Stunde bei 70°C nachgerührt, das Pigment isoliert und bei

80 °C getrocknet.
Das mit einer Ausbeute von über 98 % erhaltene rotviolette Pigment zeichnet sich durch hervorragende rheologische und coloristische Eigenschaften aus. Die Glanzmessung als Maß für Flockulation der rotvioletten, schleierfreien Volltonlackierung auf Folie (AM-Lack) ergab einen Glanzwert von 87 gegenüber dem unpräparierten Vergleich, bei dem ein Wert von 73 gemessen wurde.

Anwendungsbeispiel 31

Zu 200 Teilen einer 5 %igen Suspension von C.I.-Pigment Violet 19, C.I.-Nr. 73900 - pH-Wert 7 - 7,5 - der $\beta$-Kristallmodifikation, die noch 7,5 % Ethylalkohol und 14 % Kochsalz enthält, werden in 30 Minuten 5 Teile der nach Herstellungsbeispiel 32 erhaltenen Dispergatorlösung zugegeben und weitere 10 Teile Ethylalkohol bei 40 °C zugesetzt. Anschließend wird 8 Stunden bei 40 - 45 °C gerührt, danach mit verd. NaOH auf pH 9,5 gestellt und weitere 5 Stunden bei 40 °C gerührt. Dann wird das Pigment isoliert, salzfrei gewaschen und getrocknet. Man erhält ein dem Anwendungsbeispiel 30 vergleichbares Ergebnis.

Anwendungsbeispiel 32

Zu 400 Teilen einer wäßrig-isobutanolischen Chinacridonsuspension [Isobutanolgehalt 50 %, Pigmentgehalt 8,8 % eines Chinacridonmischkristalls aus 3 Teilen 2,9-Dimethylchinacridon (C.I. Pigment Red 122, C.I.-Nr. 73915) und 1 Teil unsubstituiertem Chinacridon (C.I. Pigment Violet 19, C.I.-Nr. 73900) im Kristallgitter des 2,9-Dimethylchinacridons] werden bei 50 °C in 30 Minuten 14,1 Teile der 20 %igen Dispergatorlösung gemäß Herstellungsbeispiel 24b zugegeben und 10 Teile Propionsäure und 20 Teile Isobutanol zugesetzt.

Anschließend wird 2 Stunden bei 50 °C nachgerührt, dann in 1 Stunde mit 16,5 %iger Natronlauge auf pH 9,5 gestellt, weitere 2 Stunden gerührt, mit Wasserdampf das Isobutanol abdestilliert, das Pigment abfiltriert, salzfrei gewaschen und getrocknet.
Das Pigment, ein leuchtendes Magenta, besitzt gute rheologische Eigenschaften und führt in beiden Lacksystemen (AM und TSA-NAD) zu brillanten Lackierungen.

| | |
|---|---|
| Glanzwert (AM-Lack) | : 90 |
| Unpräparierter Vergleich | : 50 |

Anwendungsbeispiel 33

Gibt man zu 400 Teilen einer Pigmentsuspension (Isobutanolgehalt 30 %, Pigmentgehalt 8 % eines Mischkristalls aus 3 Teilen C.I.-Pigment Red 122, C.I.-Nr. 73915 und 1 Teil C.I.-Pigment Violet 19, C.I.-Nr. 73900 im Kristallgitter des C.I. Pigment Red 122) bei 70 °C in 30 - 45 Minuten unter Rühren 15,9 Teile eines Dispergators, erhalten gemäß Herstellungsbeispiel 24a, rührt weitere 3 Stunden bei 70 °C und destilliert das Lösemittel mit Wasserdampf ab, so erhält man nach Isolierung und Trocknung ein dem nach Anwendungsbeispiel 33 erhaltenen Pigment vergleichbares Produkt mit einem Glanzwert von 86.

Anwendungsbeispiel 34

Verfährt man wie in Anwendungsbeispiel 33 beschrieben, setzt aber an Stelle des dort verwendeten Dispergators 15,9 Teile Dispergator, erhalten gemäß Herstellungsbeispiel 24c, ein, so erhält man mit gleich guter Ausbeute ein Pigment mit ähnlich guten Eigenschaften.

| | |
|---|---|
| Glanzwert (AM-Lack) | : 100 |
| Unpräparierter Vergleich | : 45 |

Anwendungsbeispiel 35

Zu 1000 Teilen einer isobutanolischen Pigmentsuspension der deckenden $\gamma$-Modifikation von C.I. Pigment Violet 19 (Pigmentgehalt 8 %, Isobutanolgehalt 30 %) wird bei 50 °C in 45 Minuten eine Lösung aus 24 Teilen Dispergator, erhalten gemäß Herstellungsbeispiel 22a, und 48 Teilen Isobutanol zugetropft. Nach 3stündigem Nachrühren bei 50 - 60 °C wird das Isobutanol abdestilliert und das Pigment durch Filtration isoliert. Es wird ein blaustichigrotes Pigment mit hervorragenden rheologischen und coloristischen Eigenschaften erhalten.

| | |
|---|---|
| Glanzwert (AM-Lack) | : 88 |
| Glanzwert (AM-Lack) unpräparierter Vergleich | : 28 |

Anwendungsbeispiel 36

500 Teile einer wäßrigen Suspension, die 7,5 % C.I. Pigment Red 122, C.I.-Nr. 73915, 0,5 % Natronlauge und 30 % Isobutanol enthält, werden auf 50 °C erwärmt und bei dieser Temperatur mit einer Lösung aus 18,75 Teilen eines Dispergators, erhalten nach Herstellungsbeispiel 22a, und 35 Teilen Isobutanol versetzt und 3 Stunden bei 50 - 70 °C gerührt. Danach wird das Isobutanol abdestilliert, das Pigment isoliert und getrocknet. Man erhält ein Chinacridonmagenta mit hervorragenden rheologischen Eigenschaften und einem Glanzwert (AM-Lack) von 81.

Anwendungsbeispiel 37

Setzt man an Stelle der in Anwendungsbeispiel 36 verwendeten Dispergatorlösung 17,86 Teile der nach Herstellungsbeispiel 23 erhaltenen Dispergatorlösung bei sonst gleicher Arbeitsweise ein, erhält man ein Pigment mit verbesserten anwendungstechnischen Eigenschaften.

Glanzwert (AM-Lack) : 102
Unpräparierter Vergleich : 28

Anwendungsbeispiel 38

Wird der in Anwendungsbeispiel 36 eingesetzte Dispergator durch 18,75 Teile des nach Herstellungsbeispiel 22 erhaltenen Dispergators ersetzt, und führt man die Präparierung bei sonst gleicher Arbeitsweise aus, erhält man ein rheologisch einwandfreies Chinacridonmagenta mit hervorragenden coloristischen Eigenschaften.

Glanzwert : 82
Unpräparierter Vergleich : 28

Anwendungsbeispiel 39

210 Teile feuchtes Rohchinacridon (20,95 %ig) der α-Modifikation von C.I.-Pigment Violet 19, C.I. Nr. 73900 werden in 22,7 Teilen 33%iger Natronlauge und 517 Teilen Wasser suspendiert und 20 Minuten verrührt. Dann werden 13,2 Teile Dispergator, erhalten gemäß Herstellungsbeispiel 24, langsam zugetropft. Es wird zum Sieden erhitzt und 5 Stunden am Rückfluß erhitzt. Anschließend wird filtriert und neutral gewaschen. Das neutrale wäßrig-feuchte Chinacridon wird in 240 Teilen Isobutanol suspendiert, mit Wasser wird dann auf insgesamt 500 Teile ergänzt und 5 Stunden bei 145-150 °C im geschlossenen Gefäß gerührt. Danach wird das Lösemittel abdestilliert und das Pigment isoliert. Es wird ein hochdeckendes rheologisch einwandfreies blaustichigrotes Pigment in der γ-Modifikation des Chinacridons erhalten:

Glanzwert (AM-Lack) : 85
Unpräparierter Vergleich : 18

Anwendungsbeispiel 40

10 Teile 100%iges Pigment Red 168, C.I. Nr. 59300 und 1 Teil Dispergator, erhalten nach Herstellungsbeispiel 33, werden innerhalb 20 Sekunden auf einer Labormühle gemischt. Nach der Einarbeitung der Probe in einen Alkyd-Melaminharz-Lack liefert der Folienaufguss einen Glanzwert von 86. Die unpräparierte Probe dagegen ergibt nur einen Glanzwert von 41.

Anwendungsbeispiel 41

650 Teile einer wäßrig-isobutanolischen Pigmentsuspension (Pigmentgehalt 6,8 % von C.I. Pigment Red 122, C.I. Nr. 73915; Isobutanolgehalt 40%) werden bei 40 °C in 20 Minuten mit einer Lösung aus 2,2 Teilen Nonylphenolpolyglykolether (HLB-Wert 14) und 40 Teilen Isobutanol versetzt und 1 Stunde gerührt. Danach werden in 0,5 Stunden bei 70 °C 14,7 Teile Pigmentdispergator aus Herstellungsbeispiel 25b, verdünnt mit 30 Teilen Isobutanol, zugegeben und weitere 2 Stunden bei 70 °C gerührt. Das Isobutanol wird durch Wasserdampfdestillation entfernt, das Pigment isoliert und getrocknet.

Glanzwert (AM-Lack) : 91
Unpräparierter Vergleich : 28

Anwendungsbeispiel 42

1000 Tle einer Pigmentsuspension - Pigmentgehalt 7,5 % eines Mischkristalls aus 3 Tln C.I. Pigment Red 122, C.I. Nr. 73915 und 2 Tln C.I. Pigment Violet 19, C.I.Nr. 73900 - mit einem Isobutanolgehalt von 50 % werden unter Rühren bei 50 °C mit 3 Tln eines Laurylethersulfats der Formel $CH_3$-$(CH_2)_{11}$-O-($CH_2$-$CH_2$-O-$)_{2-3}SO_3Na$ in wäßriger Lösung versetzt und 45 Minuten verrührt. Danach werden 2,7 Tle 1 %iger Salzsäure langsam zugegeben und nach 15 Minuten in 30 Minuten 37,5 Tle Pigmentdispergator aus Herstellungsbeispiel 24c, verdünnt mit 37,5 Tln Ethylenglykolmonoethylether, zugetropft. Anschließend wird 4 Stunden bei 50 °C gerührt, mit Wasserdampf das Lösemittel abdestilliert, das Pigment isoliert und getrocknet.

| | |
|---|---|
| Glanzwert (AM-Lack) | : 93 |
| Unpräparierter Vergleich | : 57 |

Anwendungsbeispiel 43

100 Tle Indanthren-Bordo RR (C.I. Vat Red 15, C.I.Nr. 71100) von 98-99 %iger Reinheit - erhalten durch Ausfällen von Indanthren-Bordo RR aus alkalisch-wäßriger Lösung durch Zugabe von Salzsäure und nachfolgendem Isolieren, Waschen, Trocknen und Mahlen des Produktes - werden in 1560 Tln Chlorbenzol eingerührt. Dann gibt man 4 Tle 33 %ige NaOH zu und rührt 1 Stunde bei 20-30 °C nach. Anschließend erwärmt man langsam zum Sieden und erhitzt 2 Stunden am Rückfluß. Nach Abkühlung auf 75 °C setzt man 33,3 Tle Pigmentdispergator aus Herstellungsbeispiel 25b zu und rührt 1 Stunde bei 70-80 °C. Nach Zugabe von Wasser wird das Chlorbenzol mit Wasserdampf abdestilliert, das Pigment abfiltriert, neutral gewaschen und bei 60 °C getrocknet. Man erhält ein gelbstichigrotes Pigment mit einwandfreien anwendungstechnischen Eigenschaften.

| | |
|---|---|
| Glanzwert (AM-Lack) | : 80 |
| Unpräparierter Vergleich | : 30 |

Anwendungsbeispiel 44

In 100 Teilen AM-Lack werden 10 Tle C.I. Pigment Red 170 in seiner deckenden $\gamma$-Modifikation (spez. Oberfläche nach BET: 22 $m^2/g$) unter Zusatz der Lösung des Additionsproduktes aus Herstellungsbeispiel 25 (0,5 Teile 100 %iges Additionsprodukt) dispergiert und an der damit erstellten Lackierung ein Glanzwert von 88 gemessen. Wird die Lösung des Additionsproduktes aus Herstellungsbeispiel 25 durch Lösemittel ersetzt, wird eine Lackierung mit dem Glanzwert 59 erhalten.

Anwendungsbeispiel 45

200 Teile eines 26,7 %igen wäßrigen Preßkuchens von C.I.-Pigment Orange 36, C.I.-Nr. 11780 werden in einem Gemisch aus 270 Teilen Wasser, 180 Teilen Isobutanol und 20 Teilen der nach Herstellungsbeispiel 25b erhaltenen 30 %igen Dispergatorlösung verrührt. Die Suspension wird anschließend in einem Autoklaven unter Rühren auf 140 °C erhitzt und 2 Stunden bei dieser Temperatur gehalten. Nach dem Abkühlen auf Raumtemperatur wird in die Mischung Wasserdampf eingeleitet und das Isobutanol azeotrop abdestilliert. Danach wird das Pigment aus der zurückbleibenden wäßrigen Suspension isoliert, getrocknet und gemahlen.

| | |
|---|---|
| Glanzwert (AM-Lack) | : 81 |
| Unpräparierter Vergleich | : 52 |

Anwendungsbeispiel 46

In 100 Teilen AM-Lack werden 10 Tle C.I. Pigment Brown 25 (spez. Oberfläche nach BET: 80 $m^2/g$) unter Zusatz der Lösung des Additionsproduktes aus Herstellungsbeispiel 25a (1 Teil 100 %iges Additionsprodukt) dispergiert und an der damit erstellten Lackierung ein Glanzwert von 80 gemessen. Wird die Lösung des Additionsproduktes aus Herstellungsbeispiel 25a durch Lösemittel ersetzt, wird eine Lackierung mit dem Glanzwert 47 erhalten.

Anwendungsbeispiel 47

200 Teile eines 29,3 %igen wäßrigen Preßkuchens von C.I. Pigment Red 188, C.I.-Nr. 12467 werden in 500 Teilen Wasser verrührt und der erhaltenen Pigmentsuspension 270 Teile Chlorbenzol zugesetzt, dem 10 Teile der nach Herstellungsbeispiel 25b erhaltenen 30 %igen Dispergatorlösung beigemischt sind. Unter

Rühren wird die Suspension auf 90 °C erhitzt und 2 Stunden bei dieser Temperatur gehalten. Anschließend wird das Lösemittel durch Einleiten von Wasserdampf abdestilliert und das Pigment aus der wäßrigen Suspension isoliert, bei 60-70 °C getrocknet und gemahlen.

Glanzwert (AM-Lack) : 83
Unpräparierter Vergleich : 44

Anwendungsbeispiel 48

100 Teile einer 5 %igen wäßrigen Pigmentsuspension von C.I. Pigment Yellow 154 werden bei Raumtemperatur innerhalb von 3 Minuten mit 4,8 Teilen der nach Herstellungsbeispiel 34 erhaltenen Dispergatorlösung unter Rühren versetzt, danach wird mit Eisessig auf pH 4 eingestellt und 30 Minuten nachgerührt. Es wird dann auf 60 °C erwärmt, mit 6 %iger Natronlauge auf pH 9,5 eingestellt und 90 Minuten bei dieser Temperatur nachgerührt. Anschließend wird das Pigment heiß abfiltriert, gewaschen und getrocknet.

Glanzwert (AM-Lack) : 80
Unpräparierter Vergleich : 47

Anwendungsbeispiel 49

10 Teile C.I. Pigment Yellow 154 und 2,5 Teile Dispergator, erhalten gemäß Herstellungsbeispiel 35, werden innerhalb von 3 Stunden auf einer Rollbank gemischt. Der Folienaufguß der Probe (AM-Lack) liefert einen Glanzwert von 81, wogegen die unpräparierte Vergleichsprobe nur einen Wert von 19 ergibt.

**Patentansprüche**

**1.** Additionsverbindung und ihre Salze, erhältlich durch Umsetzung eines Polyepoxids oder mehrerer Polyepoxide mit Aminen und gegebenenfalls anschließender Salzbildung mit einer Säure, dadurch gekennzeichnet, daß die Additionsverbindung in einem Verfahren erhältlich ist, in dem ein Polyepoxid oder mehrere Polyepoxide der idealisierten allgemeinen Formel (I)

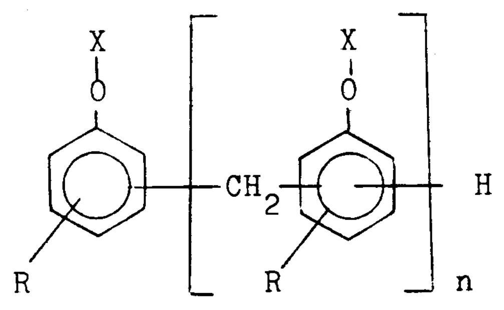

(I)

in der

n eine Zahl von 2 bis 10,
R ein Wasserstoffatom oder eine $C_1$-$C_{24}$-Alkylgruppe und
X den 2,3-Epoxypropylrest bedeuten,

mit einem Amin oder mehreren Aminen der allgemeinen Formel (II)

$(H_2N\text{-}R^2\text{-})_pN(H)_{2\text{-}p}\text{-}R^1$ (II)

in der

p eine ganze Zahl von 0 bis 2,
$R^1$ einen gesättigten oder ungesättigten aliphatischen Alkylrest mit 8 bis 24 C-Atomen und
$R^2$ eine $C_1$-$C_{12}$-Alkylengruppe bedeuten,

sowie mit mindestens einem Amin aus der Gruppe der Amine der allgemeinen Formeln (III1), (III2), (III3) und (III4)

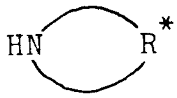 (III1)

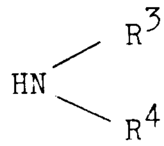 (III2)

$H_2N-A-R^4$ (III3)

$H_2N-A^*-NR^3-(A)_q-R^4$ (III4)

in denen

- $R^*$ zusammen mit dem N-Atom ein heterocyclisches Ringsystem, das gegebenenfalls weiter substituiert ist, darstellt und
- $R^3$ für ein Wasserstoffatom oder eine $C_1$-$C_{24}$-Alkylgruppe und
- $R^4$ für ein gesättigtes oder ungesättigtes, einkerniges oder mehrkerniges carbocyclisches oder heterocyclisches Ringsystem mit 2 bis 22 C-Atomen oder für zwei oder mehrere der genannten Ringsysteme, die untereinander durch ein Glied der Formel $-CH_2-$, -O-, -S-, -CO-, -SO, $-SO_2-$, -NH- oder eine Kombination der vorstehenden Glieder verbunden sind, wobei die genannten Ringssysteme bzw. die Gruppe der verbundenen Ringsysteme gegebenenfalls durch einen oder mehrere der Reste $-R^5$, Halogen wie -F, -Cl oder -Br, $-OR^5$, $-NR^5R^6$, $-COOR^5$, $-CONR^5R^6$, $-NR^5COR^6$, -CN, $-CF_3$ und $-NO_2$ substituiert sind, wobei $-R^5$ und $-R^6$ unabhängig voneinander -H oder $C_1$-$C_{24}$-Alkyl bedeuten,

  oder für einen Rest der Formel $-R^7-NR^8R^9$, in der $R^7$ eine $C_2$-$C_{200}$-Alkylengruppe, die durch Sauerstoffatome unterbrochen sein kann, sowie $R^8$ und $R^9$ unabhängig voneinander -H oder $C_1$-$C_{24}$-Alkyl bedeuten,

  oder für einen Rest der Formel (IIIa) oder (IIIb)

  $$-\left[(CHR^{10})_y-NR^{11}\right]_m-(CHR^{10})_y-NR^8R^9 \qquad (IIIa)$$

  $-(CHR^{10})_y-N[(CHR^{10})_y-NR^8R^9]_2$ (IIIb)

  in denen die y unabhängig voneinander jeweils eine ganze Zahl von 2 bis 6, m eine ganze Zahl von 1 bis 6 und $R^8$, $R^9$, $R^{10}$ und $R^{11}$ unabhängig voneinander -H oder $C_1$-$C_{24}$-Alkyl bedeuten,

  oder für einen Rest der Formel $-R^{12}-OR^{13}$, in der $R^{12}$ eine Alkylengruppe mit 2 bis 30 C-Atomen, die durch -O- und/oder $-NR^{13}-$ unterbrochen sein kann, und $R^{13}$ -H oder eine $C_1$-$C_{24}$-Alkylgruppe bedeuten,
- A für eine $C_1$-$C_{30}$-Alkylengruppe und
- $A^*$ für eine $C_1$-$C_{12}$-Alkylengruppe stehen und
- q 0 oder 1 ist,

in solchem Mengenverhältnis umgesetzt werden, daß 1 bis 99 % der Epoxygruppen des Polyepoxids der Formel (I) mit dem Amin bzw. den Aminen der Formel (II) und 99 bis 1 % der Epoxygruppen mit dem Amin bzw. den Aminen aus der Gruppe der Amine der Formeln (III1) bis (III4) umgesetzt werden, und gegebenenfalls das erhaltene Produkt mit einer Säure umgesetzt wird.

2. Additionsverbindung und ihre Salze nach Anspruch 1, dadurch gekennzeichnet, daß das Polyepoxid der Formel (I) ein Epoxyäquivalentgewicht von 150 bis 300 g pro Mol Epoxygruppen aufweist.

3. Additionsverbindung und ihre Salze nach Anspruch 1 oder 2, dadurch gekennzeichnet, daß R in Formel (I) -H oder $C_1$-$C_4$-Alkyl ist.

4. Additionsverbindung und ihre Salze nach einem oder mehreren der Ansprüche 1 bis 3, dadurch gekennzeichnet, daß die Amine der Formel (II) Fettamine mit 12 bis 20 C-Atomen sind.

5. Additionsverbindung und ihre Salze nach einem oder mehreren der Ansprüche 1 bis 3, dadurch gekennzeichnet, daß die Amine der Formel (II) N-(Aminopropyl)-fettamine und/oder N,N-Bis-(aminopropyl)-fettamine sind.

6. Additionsverbindung und ihre Salze nach einem oder mehreren der Ansprüche 1 bis 5, dadurch gekennzeichnet, daß in dem Amin der allgemeinen Formel (III2) $R^3$ für -H oder $C_1$-$C_4$-Alkyl und $R^4$ für ein aromatisches carbocyclisches Ringsystem oder ein heteroaromatisches Ringsystem stehen, wobei jedes Ringsystem durch einen oder mehrere der Reste -$R^5$, Halogen wie F, -Cl oder -Br, -$OR^5$, -$NR^5R^6$, -$COOR^5$, -$CONR^5R^6$, -$NR^5COR^6$, -CN, -$CF_3$ und
-$NO_2$ substituiert sein können und dabei -$R^5$ und -$R^6$ unabhängig voneinander -H oder $C_1$-$C_4$-Alkyl bedeuten, oder $R^4$ für einen Rest der Formel (IIIa) gemäß Anspruch 1, wobei y die Zahl 2 oder 3, m die Zahl 1, 2 oder 3, $R^{10}$ den Rest -H oder Methyl sowie $R^8$, $R^9$ und $R^{11}$ unabhängig voneinander den Rest -H, Methyl oder Ethyl bedeuten, steht oder
$R^4$ für -$R^7$-$NR^8R^9$, worin $R^7$ eine $C_2$-$C_{200}$-Alkylengruppe, die durch Sauerstoffatome unterbrochen sein kann,
und $R^8$ und $R^9$ unabhängig voneinander den Rest -H oder $C_1$-$C_4$-Alkyl bedeuten, steht.

7. Additionsverbindung und ihre Salze nach einem oder mehreren der Ansprüche 1 bis 5, dadurch gekennzeichnet, daß in dem Amin der allgemeinen Formel (III1)
R* zusammen mit dem Stickstoffatom einen heterocyclischen Ring mit 5 oder 6 Ringatomen, an dem noch ein oder mehrere Benzolringe ankondensiert sein können und das Ringsystem gegebenenfalls noch weiter substituiert ist, bedeuten.

8. Additionsverbindung und ihre Salze nach einem oder mehreren der Ansprüche 1 bis 5, dadurch gekennzeichnet, daß in dem Amin der Formel (III3) oder (III4) $R^4$ für ein einkerniges oder mehrkerniges carbocyclisches aromatisches Ringsystem oder für ein heterocyclische Ringsystem steht, wobei die Ringsysteme gegebenenfalls substituiert sind.

9. Verfahren zur Herstellung einer Additionsverbindung durch Umsetzung eines Polyepoxids oder mehrerer Polyepoxide mit Aminen und gegebenenfalls anschließender Salzbildung mit einer Säure, dadurch gekennzeichnet, daß ein Polyepoxid oder mehrere Polyepoxide der idealisierten allgemeinen Formel (I)

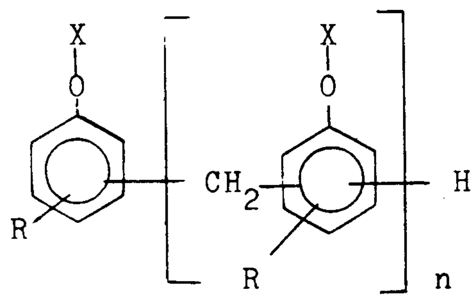

(I)

in der
n eine Zahl von 2 bis 10,
R ein Wasserstoffatom oder eine $C_1$-$C_{24}$-Alkylgruppe und
X den 2,3-Epoxypropylrest bedeuten.
mit einem Amin oder mehreren Aminen der allgemeinen Formel (II)

$(H_2N\text{-}R^2\text{-})_pN(H)_{2\text{-}p}\text{-}R^1$ (II)

in der
p eine ganze Zahl von 0 bis 2,

$R^1$ einen gesättigten oder ungesättigen aliphatischen Alkylrest mit 8 bis 24 C-Atomen und
$R^2$ eine $C_1$-$C_{12}$-Alkylengruppe bedeuten,

sowie mit mindestens einem Amin aus der Gruppe der Amine der allgemeinen Formeln (III1), (III2), (III3) und (III4)

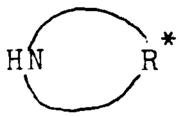 (III1)

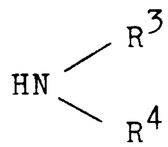 (III2)

$$H_2N\text{-}A\text{-}R^4 \quad (III3)$$

$$H_2N\text{-}A^*\text{-}NR^3\text{-}(A)_q\text{-}R^4 \quad (III4)$$

in denen

$R^*$ zusammen mit dem N-Atom ein heterocyclisches Ringsystem, das gegebenenfalls weiter substituiert ist, darstellt und

$R^3$ für ein Wasserstoffatom oder eine $C_1$-$C_{24}$-Alkylgruppe und

$R^4$ für ein gesättigtes oder ungesättigtes, einkerniges oder mehrkerniges carbocyclisches oder heterocyclisches Ringsystem mit 2 bis 22 C-Atomen oder für zwei oder mehrere der genannten Ringsysteme, die untereinander durch ein Glied der Formel $-CH_2-$, -O-, -S-, -CO-, -SO-, $-SO_2-$, -NH- oder eine Kombination der vorstehenden Glieder verbunden sind, wobei die genannten Ringssysteme bzw. die Gruppe der verbundenen Ringsysteme gegebenenfalls durch einen oder mehrere der Reste $-R^5$, Halogen wie -F, -Cl oder -Br, $-OR^5$, $-NR^5R^6$, $-COOR^5$, $-CONR^5R^6$, $-NR^5COR^6$, -CN, $-CF_3$ und $-NO_2$ substituiert sind, wobei $-R^5$ und $-R^6$ unabhängig voneinander -H oder Alkyl bedeuten,

oder für einen Rest der Formel $-R^7-NR^8R^9$, in der $R^7$ eine $C_2$-$C_{200}$-Alkylengruppe, die durch Sauerstoffatome unterbrochen sein kann, sowie $R^8$ und $R^9$ unabhängig voneinander -H oder $C_1$-$C_{24}$-Alkyl bedeuten, oder für einen Rest der Formel (IIIa) oder (IIIb)

$$-\left[(CHR^{10})_y-NR^{11}\right]_m-(CHR^{10})_y-NR^8R^9 \qquad (IIIa)$$

$$-(CHR^{10})_y-N[(CHR^{10})_y-NR^8R^9]_2 \qquad (IIIb)$$

in denen die y unabhängig voneinander jeweils eine ganze Zahl von 2 bis 6, m eine ganze Zahl von 1 bis 6 und $R^8$, $R^9$, $R^{10}$ und $R^{11}$ unabhängig voneinander -H oder Alkyl bedeuten,

oder für einen Rest der Formel $-R^{12}-OR^{13}$, in der $R^{12}$ eine Alkylengruppe mit 2 bis 30 C-Atomen, die durch -O- und/oder $-NR^{13}-$ unterbrochen sein kann, und $R^{13}$ -H und/oder eine $C_1$-$C_{24}$-Alkylgruppe bedeuten,

A für eine $C_1$-$C_{30}$-Alkylengruppe und

$A^*$ für eine $C_1$-$C_{12}$-Alkylengruppe stehen sowie

q 0 oder 1 ist,

in solchem Mengenverhältnis umgesetzt werden, daß 1 bis 99 % der Epoxygruppen des Polyepoxids der Formel (I) mit dem Amin bzw. den Aminen der Formel (II) und 99 bis 1 % der Epoxygruppen mit dem Amin bzw. den Aminen aus der Gruppe der Amine der Formeln (III1) bis (III4) umgesetzt werden, und gegebenenfalls das erhaltene Produkt mit einer Säure umgesetzt wird.

**10.** Verfahren nach Anspruch 9, dadurch gekennzeichnet, daß die Umsetzung der Amine mit dem Polyepoxid bei 0 bis 180 °C durchgeführt wird.

**11.** Verfahren nach einem der Anspruch 9 oder 10, dadurch gekennzeichnet, daß die Mischung der einzusetzenden Amine der Formeln (II) und (III1) bis (III4) in einem weitgehend inerten Lösemittel vorgelegt wird und anschließend das Polyepoxid der Formel (I) zugegeben wird.

**12.** Verfahren nach einem der Ansprüche 9 bis 11, dadurch gekennzeichnet, daß bei der Umsetzung das Verhältnis der Zahl der Epoxygruppen zur Gesamtzahl der Aminmoleküle der Formeln (II) und (III1) bis (III4) 1 : 0,8 bis 1 : 1 beträgt.

**13.** Verwendung der nach einem der Ansprüche 1 bis 8 definierten Additionsverbindung bzw. ihres Salzes als Dispergiermittel für Feststoffe.

**14.** Verwendung nach Anspruch 13, dadurch gekennzeichnet, daß ein Pigment mit der nach einem der Ansprüche 1 bis 8 definierten Additionsverbindung, beziehungsweise einem ihrer Salze, beschichtet und das beschichtete Pigment in der Folge in einem organischen Medium dispergiert wird oder daß die nach einem der Ansprüche 1 bis 10 definierte Additionsverbindung, beziehungsweise eines ihrer Salze, beim Dispergieren eines Pigments dem organischen Medium zugesetzt wird oder in dem organischen Medium enthalten ist.

## Claims

**1.** An addition compound and its salts, obtainable by reaction of a polyepoxide or several polyepoxides with amines and, if appropriate subsequent salt formation with an acid, wherein the addition compound is obtainable in a process in which at least one polyepoxide of the idealized formula (I)

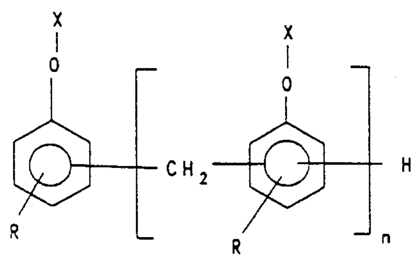

(I)

in which

- n is a number from 2 to 10,
- R is a hydrogen atom or a $C_1$-$C_{24}$-alkyl group, and
- X is the 2,3-epoxypropyl radical,

are reacted with at least one amine of the formula (II)

$(H_2N\text{-}R^2\text{-})_pN(H)_{2-p}\text{-}R^1$ (II)

in which

- p is an integer from 0 to 2,
- $R^1$ is a saturated or unsaturated aliphatic alkyl radical having 8 to 24 carbon atoms and
- $R^2$ is a $C_1$-$C_{12}$-alkylene group, and with at least one amine from the group comprising the amines of the formulae (III1), (III2), (III3) and (III4)

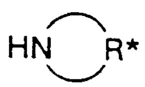 (III1)

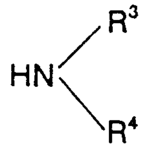 (III2)

$H_2N\text{-}A\text{-}R^4$ (III3)

$H_2N\text{-}A^*\text{-}NR^3\text{-}(A)_q\text{-}R^4$ (III4)

in which

$R^*$ , together with the nitrogen atom, is a further substituted or an unsubstituted heterocyclic ring system,

$R^3$ is a hydrogen atom or a $C_1$-$C_{24}$-alkyl group,

and

$R^4$ represents a saturated or unsaturated, mononuclear or polynuclear, carbocyclic or heterocyclic ring system having 2 to 22 carbon atoms or represents two or more of the ring systems mentioned, which are linked to one another through a member of the formula $-CH_2-$, -O-, -S-, -CO-, -SO-, $-SO_2-$, -NH- or a combination of the above members, the ring systems or the group of linked ring systems mentioned being unsubstituted or further substituted by one or more of the radicals $-R^5$, halogen, such as F, Cl or Br, $-OR^5$, $-NR^5R^6$, $-COOR^5$, $-CONR^5R^6$, $-NR^5COR^6$, -CN, $-CF_3$ or $-NO_2$, where $R^5$ and $R^6$, independently of one another, are H or $C_1$-$C_{24}$-alkyl; or represents a radical of the formula $-R^7\text{-}NR^8R^9$, in which $R^7$ is a $C_2$-$C_{200}$-alkylene group or a $C_2$-$C_{200}$-alkylene group interrupted by oxygen atoms, and $R^8$ and $R^9$, independently of one another, are H or $C_1$-$C_{24}$-alkyl or represents a radical of the formula (IIIa) or (IIIb)

$$-\left[(CHR^{10})_y\text{-}NR^{11}\right]_m\text{-}(CHR^{10})_y\text{-}NR^8R^9 \qquad \text{(IIIa)}$$

$$-(CHR^{10})_y\text{-}N[(CHR^{10})_y\text{-}NR^8R^9]_2 \qquad \text{(IIIb)}$$

in which y, independently of one another, in each case is an integer from 2 to 6, m is an integer from 1 to 6 and $R^8$, $R^9$, $R^{10}$ and $R^{11}$, independently of one another, are H or $C_1$-$C_{24}$-alkyl; or represents a radical of the formula $-R^{12}\text{-}OR^{13}$, in which $R^{12}$ is an alkylene group having 2 to 30 carbon atoms or is a $C_2$-$C_{30}$-alkylene group interrupted by -O- or $-NR^{13}-$ or both, and $R^{13}$ is H or a $C_1$-$C_{24}$-alkyl group,

A is a $C_1$-$C_{30}$-alkylene group,

A* is a $C_1$-$C_{12}$-alkylene group, and

q is 0 or 1, in an amount ratio such that 1 to 99 % of the epoxy groups of the polyepoxide of the formula (I) are reacted with the amine or amines of the formula (II) and 99 to 1 % of the epoxy groups are reacted with the amine or amines from the group of amines of the formulae (III1) to (III4), and the product obtained is, if appropriate, reacted with an acid.

2. An addition compound and its salts, as claimed in claim 1, wherein the polyepoxide of the formula (I) has an epoxy equivalent weight of 150 to 300 g per mole of epoxy groups.

3. An addition compound and its salts, as claimed in claim 1 or 2, wherein in the formula (I), R is H or $C_1$-$C_4$-alkyl.

4. An addition compound and its salts, as claimed in one or more of claims 1 to 3, wherein the amines of the formula (II) are fatty amines having 12 to 20 carbon atoms.

5. An addition compound and its salts, as claimed in one or more of claims 1 to 3, wherein the amines of

the formula (II) are N-(aminopropyl)-fatty amines and/or N,N-bis(aminopropyl)-fatty amines.

**6.** An addition compound and its salts, as claimed in one or more of claims 1 to 5, wherein, in the amine of the formula (III2), $R^3$ represents H or $C_1$-$C_4$-alkyl and $R^4$ represents an aromatic carbocyclic ring system or a heteroaromatic ring system, where each ring system is unsubstituted or further substituted by one or more of the radicals $-R^5$, halogen, such as F, Cl or Br, $-OR^5$, $-NR^5R^6$, $-COOR^5$, $-CONR^5R^6$, $-NR^5COR^6$, -CN, $-CF_3$ and $-NO_2$, where $R^5$ and $R^6$, independently of one another, are H or $C_1$-$C_4$-alkyl, or $R^4$ represents a radical of the formula (IIIa) as claimed in claim 1, where
y is the number 2 or 3,
m is the number 1, 2 or 3,
$R^{10}$ is H or methyl, and
$R^8$, $R^9$ and $R^{11}$, independently of one another, are H, methyl or ethyl or $R^4$ represents $-R^7-NR^8R^9$, in which $R^7$ is a $C_2$-$C_{200}$ alkylene group or a $C_2$-$C_{200}$-alkylene group interrupted by oxygen atoms, and $R^8$ and $R^9$, independently of one another, are H or $C_1$-$C_4$-alkyl.

**7.** An addition compound and its salts, as claimed in one or more of claims 1 to 5, wherein, in the amine of the formula (III1), R*, together with the nitrogen atom, is a heterocyclic ring system selected from the group consisting of a heterocyclic ring having 5 or 6 ring atoms, or a heterocyclic ring having 5 to 6 ring atoms, to which one or more benzene rings are fused, where the heterocyclic ring systems are further substituted or unsubstituted.

**8.** An addition compound and its salts, as claimed in one or more of claims 1 to 5, wherein, in the amine of the formula (III3) or (III4), $R^4$ represents a mononuclear or polynuclear carbocyclic aromatic ring system or represents a heterocyclic ring system, where the ring systems are further substituted or unsubstituted.

**9.** A process for the preparation of an addition compound, which process comprises reacting at least one polyepoxide with amines and, if appropriate, subsequent salt formation with an acid, wherein at least one polyepoxide of the idealized formula (I)

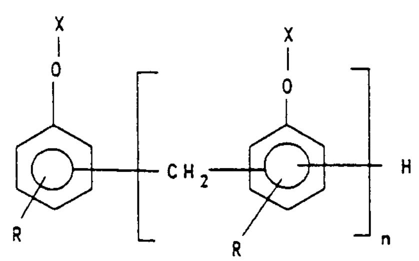

(I)

in which
n is a number from 2 to 10,
R is a hydrogen atom or a $C_1$-$C_{24}$-alkyl group, and
X is the 2,3-epoxypropyl radical, with an amine or several amines of the formula (II)

$$(H_2N-R^2-)_pN(H)_{2-p}-R^1 \qquad (II)$$

in which
p is an integer from 0 to 2,
$R^1$ is a saturated or unsaturated aliphatic alkyl radical having 8 to 24 carbon atoms and
$R^2$ is a $C_1$-$C_{12}$-alkylene group, and with at least one amine from the group comprising the amines of the formulae (III1), (III2), (III3) and (III4)

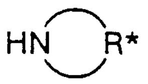 (III1)

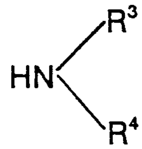 (III2)

$H_2N\text{-}A\text{-}R^4$ (III3)

$H_2N\text{-}A^*\text{-}NR^3\text{-}(A)_q\text{-}R^4$ (III4)

in which

$R^*$ ,together with the nitrogen atom, is a further substituted or an unsubstituted heterocyclic ring system,

$R^3$ is a hydrogen atom or a $C_1$-$C_{24}$-alkyl group, and

$R^4$ represents a saturated or unsaturated, mononuclear or polynuclear, carbocyclic or heterocyclic ring system having 2 to 22 carbon atoms or represents two or more of the ring systems mentioned, which are linked to one another through a member of the formula $-CH_2-$, -O-, -S-, -CO-, -SO-, - $SO_2$-, -NH- or a combination of linked ring systems mentioned being unsubstituted or further substituted by one or more of the radicals $-R^5$, halogen, such as F, Cl or Br, $-OR^5$, $-NR^5R^6$, $-COOR^5$, $-CONR^5R^6$, $-NR^5COR^6$, -CN, $-CF_3$ or $-NO_2$, where $R^5$ and $R^6$, independently of one another, are H or alkyl; or represents a radical of the formula $-R^7-NR^8R^9$, in which $R^7$ is a $C_2$-$C_{200}$-alkylene group or a $C_2$-$C_{200}$-alkylene group interrupted by oxygen atoms, and $R^8$ and $R^9$, independently of one another, are H or $C_1$-$C_{24}$-alkyl; or represent a radical of the formula (IIIa) or (IIIb)

$$-\left[(CHR^{10})_y\text{-}NR^{11}\right]_m-(CHR^{10})_y\text{-}NR^8R^9 \qquad \text{(IIIa)}$$

$$-(CHR^{10})_y\text{-}N[(CHR^{10})_y\text{-}NR^8R^9]_2 \qquad \text{(IIIb)}$$

in which

y , independently of one another, in each case is an integer from 2 to 6,

m is an integer from 1 to 6 and

$R^8$, $R^9$ $R^{10}$ and $R^{11}$, independently of one another, are H or alkyl;

or represents a radical of the formula $-R^{12}-OR^{13}$, in which

$R^{12}$ is an alkylene group having 2 to 30 carbon atoms or is a $C_2$-$C_{30}$-alkylene group interrupted by -O- or $-NR^{13}-$ or both, and $R^{13}$ is H and/or a $C_1$-$C_{24}$-alkyl group,

A is a $C_1$-$C_{30}$-alkylene group,

A* is a $C_1$-$C_{12}$-alkylene group, and

q is 0 or 1,

in an amount ratio such that 1 to 99 % of the epoxy groups of the polyepoxide of the formula (I) are reacted with the amine or amines of the formula (II) and 99 to 1 % of the epoxy groups are reacted with the amine or amines from the group of amines of the formulae (III1) to (III4), and the product obtained is, if appropriate, reacted with an acid.

**10.** The process as claimed in claim 9, wherein the reaction of the amines with the polyepoxide is carried out at 0 to 180 ° C.

**11.** The process as claimed in claim 9 or 10, wherein the mixture of the amines of the formulae (II) and (III 1) to (III 4) to be employed is presented in a substantially inert solvent, and the polyepoxide of the formula (I) is subsequently added.

**12.** The process as claimed in one or more of claims 9 to 11, wherein the ratio of the number of epoxy groups to the total number of amine molecules of the formulae (II) and (III 1)to (III 4) in the reaction is 1

: 0.8 to 1 : 1.

**13.** A method of using an addition compound or one of its salts, defined in claims 1 to 8 as a dispersant of a solid.

**14.** A method of using as claimed in claim 13 wherein a pigment is coated with the addition compound, or one of its salts, as defined in one or more of claims 1 to 8, and the coated pigment is subsequently dispersed in an organic medium or wherein the addition compound as defined in one or more of claims 1 to 10, or one of its salts, is added to the organic medium, during dispersal of the pigment or is contained in the organic medium.

**Revendications**

**1.** Composé d'addition et ses sels , que l'on peut obtenir par réaction d'un polyépoxyde ou de plusieurs polyépoxydes avec des amines et éventuellement ensuite formation de sel avec un acide , caractérisé en ce que le composé d'addition peut être obtenu dans un procédé dans lequel on fait réagir un polyépoxyde ou plusieurs polyépoxydes de formule générale idéalisée (I)

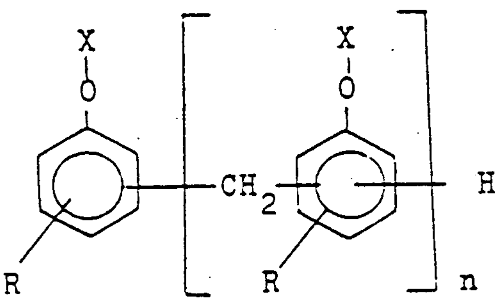

(I)

dans laquelle
- n est un nombre valant 2 à 10 ,
- R représente un atome d'hydrogène ou un groupe alkyle en $C_1$ à $C_{24}$ ,et
- X représente le reste 2,3-époxypropyle,

avec une amine ou avec plusieurs amines de formule générale (II)

$(H_2N-R^2)_p-N(H)_{2-p}-R^1$ (II)

dans laquelle:
- p est un nombre entier valant 0 à 2 ,
- $R^1$ représente un reste aliphatique ayant 8 à 24 atomes de carbone,saturé ou insaturé;
- $R^2$ représente un groupe alkylène en $C_1$ à $C_{12}$ ,

ainsi qu'avec au moins une amine choisie dans l'ensemble formé par les amines répondant aux formules générales (III 1),(III 2), (III 3) et (III 4)

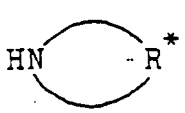 (III1)

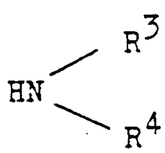 (III2)

$H_2N-A-R^4$ (III3)

$H_2N-A^*-NR^3-(A)_q-R^4$ (III4)

dans lesquelles :
- $R^*$ ,pris avec l'atome de N ,représente un système hétérocyclique, qui est éventuellement encore substitué, et

$R^3$ représente un atome d'hydrogène ou un groupe alkyle en $C_1$ à $C_{24}$ , et

$R^4$ représente un système carbocyclique ou hétérocyclique à un ou plusieurs noyaux, saturé ou insaturé,comportant 2 à 22 atomes de carbone, ou deux ou plusieurs des systèmes cycliques cités, qui sont reliés entre eux par un terme ou chaînon de formule $-CH_2-$ , -O- , -S- , -CO- , -SO- , $SO_2$-, -NH- ou par une combinaison des chaînons ci-dessus , les systèmes cycliques cités ou le groupe des systèmes cycliques liés étant éventuellement substitué(s) par un ou plusieurs des restes $-R^5$ , halogéno comme -F , -Cl ou -Br, $-OR^5$, $-NR^5R^6$ , $-COOR^5$ , $-CONR^5R^6$ , $NR^5COR^6$ , -CN , $-CF_3$ et $-NO_2$ les symboles $R^5$ et $R^6$ représentant chacun, indépendamment l'un de l'autre , -H ou un groupe alkyle en $C_1$ à $C_{24}$,
ou un reste de formule $-R^7-NR^8R^9$ , dans laquelle

$R^7$ représente un groupe alkylène en $C_2$ à $C_{200}$ , qui peut être interrompu par des atomes d'oxygène, et $R^8$ et $R^9$ représentent , indépendamment l'un de l'autre, -H ou un groupe alkyle en $C_1$ à $C_{24}$ ,

ou un reste de formule (III a) ou (III b)

$$-\left[(CHR^{10})_y-NR^{11}\right]_m-(CHR^{10})_y-NR^8R^9 \qquad \text{(IIIa)}$$

$$-(CHR^{10})_y-N[(CHR^{10})_y-NR^8R^9]_2 \qquad \text{(IIIb)}$$

dans lesquelles les y représentent chacun,indépendamment l'un de l'autre,un nombre entier valant 2 à 6 , m est un nombre entier valant 1 à 6 , et $R^8$, $R^9$ , $R^{10}$ et $R^{11}$ représentent chacun,indépendamment l'un de l'autre, -H ou un groupe alkyle en $C_1$ à $C_{24}$ ,
ou un reste de formule $-R^{12}-OR^{13}$ , dans laquelle $R^{12}$ représente un groupe alkylène ayant 2 à 30 atomes de carbone , qui peut être interrompu par -O- et/ou par $-NR^{13}-$ , et $R^{13}$ représente -H ou un groupe alkyle en $C_1$ à $C_{24}$ ,

A représente un groupe alkylène en $C_1$ à $C_{30}$, et

A* représente un groupe alkylène en $C_1$ à $C_{12}$, et

q vaut 0 ou 1 ,

la réaction étant effectuée selon un rapport quantitatif tel que 1 à 99 % des groupes époxydes du polyépoxyde de formule (I) réagissent avec l'amine ou avec les amines de formule (II) et 99 à 1 % des groupes époxydes réagissent avec l'amine ou avec les amines de l'ensemble formé par les amines répondant aux formules (III 1) à (III 4), et l'on fait éventuellement réagir avec un acide le produit ainsi obtenu .

**2.** Composé d'addition et ses sels selon la revendication 1 , caractérisé en ce que le polyépoxyde de formule (I) présente un poids d'équivalent d'époxyde de 150 à 300 g par mole des groupes époxydes .

**3.** Composé d'addition et ses sels selon la revendication 1 ou 2 , caractérisé en ce que, dans la formule (I) , R représente -H ou un groupe alkyle en $C_1$ à $C_4$ .

**4.** Composé d'addition et ses sels selon une ou plusieurs des revendications 1 à 3 , caractérisé en ce que les amines de formule (II) sont des amines grasses ayant 12 à 20 atomes de carbone .

**5.** Composé d'addition et ses sels selon une ou plusieurs des revendications 1 à 3 , caractérisé en ce que les amines de formule (II) sont des N-(aminopropyl)-amines grasses et/ou des N,N-bis(aminopropyl)-amines grasses .

**6.** Composé d'addition et ses sels selon une ou plusieurs des revendications 1 à 5 , caractérisé en ce que, dans l'amine de formule générale (III 2), $R^3$ représente -H ou un groupe alkyle en $C_1$ à $C_4$, et $R^4$ représente un système carbocyclique aromatique ou un système cyclique hétéroaromatique ,chaque système cyclique pouvant être substitué par un ou plusieurs des restes $-R^5$ , halogéno comme -F ,-Cl ou -Br, $-OR^5$ , $-NR^5R^6$ , $-COOR^5$ , $-CONR^5R^6$ , $-NR^5COR^6$ , -CN , $-CF_3$ et $-NO_2$ , et les symboles $-R^5$ et $-R^6$ représentant chacun,indépendamment l'un de l'autre , -H ou un groupe alkyle en $C_1$ à $C_4$ , ou bien $R^4$ représente un reste de formule (IIIa) selon la revendication 1 , y étant un nombre valant 2 ou 3

, m un nombre valant 1, 2 ou 3 , $R^{10}$ représentant le reste -H ou méthyle , et $R^8$ , $R^9$ et $R^{11}$ représentant chacun,indépendamment l'un de l'autre , le reste -H méthyle ou éthyle , ou bien $R^4$ représente $-R^7-NR^8R^9$ , ou $R^7$ représente un groupe alkylène en $C_2$ à $C_{200}$ qui peut être interrompu par des atomes d'oxygène,et $R^8$ et $R^9$ représentent chacun,indépendamment l'un de l'autre , le reste -H ou alkyle en $C_1$ à $C_4$.

**7.** Composé d'addition et ses sels selon une ou plusieurs des revendications 1 à 5 , caractérisé en ce que , dans l'amine de formule générale (III 1) , R* pris avec l'atome d'azote représente un noyau hétérocyctique comportant 5 à 6 atomes du noyau ,sur lequel un ou plusieurs noyaux benzéniques peu(ven)t être encore condensé(s) et le système cyclique peut éventuellement être encore substitué .

**8.** Composé d'addition et ses sels selon une ou plusieurs des revendications 1 à 5 , caractérisé en ce que , dans l'amine de formule (III 3) ou ( III 4) , $R^4$ représente un système carbocyclique aromatique à un ou plusieurs noyaux ou un système hétérocyclique , les systèmes cycliques pouvant éventuellement être substitué .

**9.** Procédé pour préparer un composé d'addition ,par réaction d'un polyépoxyde ou de plusieurs polyépoxydes avec des amines et éventuellement formation subséquente d'un sel avec un acide , procédé caractérisé en ce qu'on fait réagir un polyépoxyde ou plusieurs polyépoxydes répondant à la formule générale idéalisée (I) :

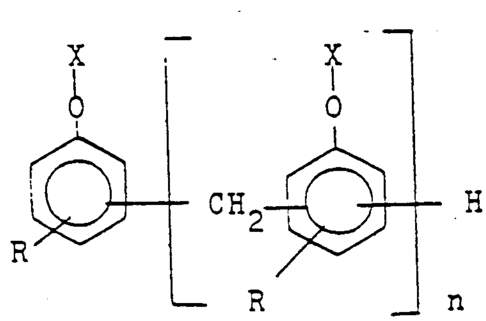

(I)

dans laquelle

- n est un nombre valant 2 à 10 ,
- R représente un atome d'hydrogène ou un groupe alkyle en $C_1$ à $C_{24}$ et
- X représente le groupe 2,3-époxypropyle ,

avec une amine ou avec plusieurs amines répondant à la formule générale (II)

$(H_2N-R^2)p - N(H)_{2-p}- R^1$ (II)

dans laquelle :

- p est un nombre entier valant 0 à 2,
- $R^1$ représente un reste alkyle aliphatique,saturé ou insaturé,ayant 8 à 24 atomes de carbone, et
- $R^2$ représente un groupe alkylène en $C_1$ à $C_{12}$ ,

ainsi qu'avec au moins une amine de l'ensemble formé par les amines répondant aux formules générales (III 1),(III 2),(III 3) et (III 4)

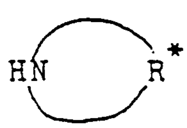

(III1)

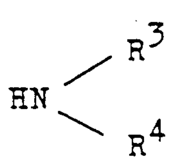

(III2)

$H_2N-A-R^4$ (III3)

$H_2N-A^*-NR^3-(A)_q-R^4$ (III4)

dans lesquelles

- $R^*$ ,pris avec l'atome de N , représente un système hétérocyclique,qui est éventuellement encore substitué , et
- $R^3$ représente un atome d'hydrogène ou un groupe alkyle en $C_1$ à $C_{24}$, et
- $R^4$ représente un système carbocyclique ou hétérocyclique à un ou à plusieurs noyaux, saturé ou insaturé,comportant 2 à 22 atomes de carbone ou deux ou plusieurs des systèmes cycliques cités qui sont reliés l'un à l'autre par un terme ou chaînon de formule $-CH_2-$ , -O- , -S- , -CO- , -SO- ,$-SO_2-$-NH- ou par une combinaison des chainons ci-dessus , les systèmes cycliques cités ou les groupes des systèmes cycliques relés étant éventuellement substitués par un ou plusieurs des restes $-R^5$, halogéno comme -F, -Cl ou -Br , $-OR^5$ , $-NR^5R^6$ , $-COOR^5$ , $-CONR^5R^6$ ,$-NR^5COR^6$ , -CN , $-CF_3$ et $NO_2$, les symboles $R^5$ et $R^6$ représentant chacun, indépendamment l'un de l'autre , -H ou un groupe alkyle ,
  ou le reste de formule $-R^7-NR^8R^9$ , dans laquelle
  $R^7$ représente un groupe alkylène en $C_2$ à $C_{200}$ , qui peut être interrompu par des atomes d'oxygène , et $R^8$ et $R^9$ représentent chacun,indépendamment l'un de l'autre, -H ou un groupe alkyle en $C_1$ à $C_{24}$ , ou un reste de formule (IIIa) ou (IIIb)

$$-\left[(CHR^{10})_y-NR^{11}\right]_m-(CHR^{10})_y-NR^8R^9 \qquad \text{(IIIa)}$$

$$-(CHR^{10})_y-N[(CHR^{10})_y-NR^8R^9]_2 \qquad \text{(IIIb)}$$

  dans lesquelles les indices y représentent chacun,indépendamment l'un de l'autre , un nombre entier valant 2 à 6 , m est un nombre entier valant 1 à 6 , et les symboles $R^8$ , $R^9$, $R^{10}$ et $R^{11}$ représentent chacun , indépendamment l'un de l'autre , -H ou un groupe alkyle,
  ou un reste de formule $-R^{12}-OR^{13}$ , dans laquelle $R^{12}$ représente un groupe alkylène ayant 2 à 30 atomes de carbone , qui peut être interrompu par -O- et/ou par $-NR^{13}-$ , et $R^{13}$ représente -H et/ou un groupe alkyle en $C_1$ à $C_{24}$ ,
- A représente un groupe alkylène en $C_1$ à $C_{30}$,et
- A* représente un groupe alkylène en $C_1$ à $C_{12}$ , et
- q vaut 0 ou 1 ,

la réaction étant réalisée selon un rapport quantitatif tel qu'l à 99 % des groupes époxydes du polyépoxyde de formule (I) réagissent avec l'amine ou avec les amines de formule (II) et 99 à 1 % des groupes époxydes réagissent avec l'amine ou avec les amines de l'ensemble des amines répondant aux formules (III 1) à (III 4) , et l'on fait éventuellement réagir avec un acide le produit ainsi formé .

**10.** Procédé selon la revendication 9 , caractérisé en ce qu'on effectue entre 0 et 180 °C la réaction des amines avec le polyépoxyde .

**11.** Procédé selon l'une des revendications 9 ou 10 ,caractérisé en ce qu'on place tout d'abord le mélange des amines à utiliser,répondant aux formules (II) et (III 1 ) à ( III 4),dans un solvant largement inerte et l'on ajoute ensuite le polyépoxyde de formule (I) .

**12.** Procédé selon l'une des revendications 9 à 11 , caractérisé en ce que, dans la réaction, le rapport entre le nombre des groupes époxydes et le nombre total des molécules d'amines répondant aux formules (II) et (III 1) à (III 4) se situe entre 1: 0.8 et 1:1.

**13.** Utilisation des composés d'additions ou de leurs sels, définis selon l'une des revendications 1 à 8 , comme dispersants pour des solides .

**14.** Utilisation selon la revendication 13 , caractérisée en ce qu'on revêt un pigment avec un composé d'addition, ou avec un de ses sels,défini selon l'une des revendications 1 à 8 ,et l'on disperse ensuite dans un milieu organique le pigment ainsi revêtu ,ou bien ce que,lors de la dispersion d'un pigment, on ajoute au milieu organique le composé d'addition défini selon l'une des revendications 1 à 10 ,ou un de ses sels, ou en ce que ce composé ou son sel est contenu dans le milieu organique.